(19) Europäisches Patentamt / European Patent Office / Office européen des brevets

(11) **EP 4 295 182 B1**

(12) **EUROPEAN PATENT SPECIFICATION**

(45) Date of publication and mention
of the grant of the patent:
**05.08.2026 Bulletin 2026/32**

(51) International Patent Classification (IPC):
**G02B 6/10** *(2006.01)*    **G02B 27/09** *(2006.01)*
**G02B 27/01** *(2006.01)*    **G02B 5/00** *(2006.01)*

(21) Application number: **22824431.5**

(22) Date of filing: **09.06.2022**

(52) Cooperative Patent Classification (CPC):
**G02B 27/0172; G02B 5/003;** G02B 2027/012;
G02B 2027/0125

(86) International application number:
**PCT/IL2022/050621**

(87) International publication number:
**WO 2022/264123 (22.12.2022 Gazette 2022/51)**

(54) **ENCAPSULATED LIGHT-GUIDE OPTICAL ELEMENTS FOR NEAR EYE DISPLAY**

VERKAPSELTE OPTISCHE LICHTLEITERELEMENTE FÜR AUGENNAHE ANZEIGE

ÉLÉMENTS OPTIQUES À GUIDE DE LUMIÈRE ENCAPSULÉS POUR AFFICHAGE PROCHE DE L'OEIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2021 US 202163210672 P
04.10.2021 US 202163251918 P
28.03.2022 US 202263324164 P**

(43) Date of publication of application:
**27.12.2023 Bulletin 2023/52**

(73) Proprietor: **Lumus Ltd.
7403631 Ness Ziona (IL)**

(72) Inventors:
• **DANZIGER, Yochay
2514700 Kfar Vradim (IL)**
• **RONEN, Eitan
Rechovot (IL)**
• **SHAPIRA, Amir
7403631 Ness Ziona (IL)**
• **FUCHS, Ido
7403631 Ness Ziona (IL)**
• **FRIEDMANN, Edgar
Sdey-Avraham (IL)**
• **FROMMER, Aviv
2060000 Yokneam Moshava (IL)**

(74) Representative: **Kurig, Thomas
Becker Kurig & Partner
Patentanwälte mbB
Bavariastraße 7
80336 München (DE)**

(56) References cited:
WO-A1-2020/044198    WO-A1-2021/009766
WO-A1-2021/030908    WO-A2-2021/260708
US-A1- 2013 242 392    US-A1- 2016 282 622
US-A1- 2019 243 142    US-A1- 2019 278 086
US-A1- 2020 183 159    US-A1- 2020 249 482
US-A1- 2020 326 545    US-A1- 2021 033 773
US-A1- 2021 141 141    US-A1- 2021 141 225

• **KRESS BERNARD C: "Optical waveguide
combiners for AR headsets: features and
limitations", SPIE PROCEEDINGS;
[PROCEEDINGS OF SPIE ISSN 0277-786X], SPIE,
US, vol. 11062, 16 July 2019 (2019-07-16), pages
110620J - 110620J, XP060122993, ISBN:
978-1-5106-3673-6, DOI: 10.1117/12.2527680**

**Description**

CROSS-REFERENCE TO RELATED APPLICATIONS

This application claims priority from US Provisional Patent Application No. 63/210,672, filed June 15, 2021, US Provisional Patent Application No. 63/251,918, filed October 4, 2021, and US Provisional Patent Application No. 63/324,164, filed March 28, 2022.

TECHNICAL FIELD

The present invention relates to optical devices, and in particular optical devices having an encapsulated light-guide optical element.

BACKGROUND OF THE INVENTION

Optical arrangements for near eye display (NED), head mounted display (HMD) and head up display (HUD) require large aperture to cover the area where the observer's eye is located (commonly referred to as the eye motion box - or EMB). In order to implement a compact device, the image that is to be projected into the observer's eye is generated by a small optical image generator (projector) having a small aperture that is multiplied to generate a large aperture. Aperture multiplication (expansion) can be achieved in various ways. One set of solutions for achieving aperture multiplication employ a light-guide optical element (LOE), and have been described in various publications by Lumus Ltd (Israel). In some example solutions, image illumination from the image projector is injected into the LOE so as to propagate through the LOE by total internal reflection at external surfaces of the LOE. The propagating illumination is progressively coupled out of the LOE towards an observer's eye either by use of obliquely angled partial reflectors or by use of a diffractive optical element on one surface of the LOE. WO 2021/030908 A1 discloses a waveguide-based optical combiner for a near-eye display, comprising an incoupler area, one or more expander areas for pupil expansion by total internal reflection, and an outcoupler area for directing light towards the user. The waveguide may be embedded in or contact a transparent carrier and may include low-refractive-index separation layers to maintain total internal reflection. US 2019/243142 A1 discloses stacked or layered waveguide architectures for near-eye displays, including dichroic filters, absorbers associated with wavelength-selective elements, and low-refractive-index cladding layers facilitating total internal reflection. Absorbers are used to suppress undesired light, in particular in connection with optical filters and stacked waveguides. US 2021/141141 A1 discloses a near-eye display comprising first and second optical waveguides optically coupled via an interface window. The waveguides guide light by total internal reflection. Light-absorbent elements such as covers, baffles, and end-face coatings are provided to reduce stray or ambient light, typically with an air gap maintained between a cover and the waveguide faces to preserve total internal reflection.

SUMMARY OF THE INVENTION

Embodiments of the present invention provide optical elements having encapsulated light-guide optical elements (LOEs) according to claim 1, and methods of fabricating optical devices having encapsulated LOEs as defined in claim 13. Each LOE of the disclosed embodiments is formed from a light-transmitting material, having a first refractive index, that supports propagation of image illumination by total internal reflection at a pair (and in certain embodiments two pairs) of planar parallel major external surfaces of the LOE, and includes at least one optical coupling configuration for redirecting / deflecting some of the propagating image illumination. The LOE is at least partially encapsulated at the major external surfaces in a capsule formed from optical material having a second refractive index that is less than the first refractive index so as to maintain conditions of total internal reflection at the major external surfaces of the LOE. The optical material (also referred to as low index material) is directly attached to the major external surfaces such that no intervening materials or substances (including air) are present between the low index material. As a result, the encapsulation is an air-gap free encapsulation. The low index material includes at least one transparent low index material. In certain embodiments, the low index material consists only of a single transparent low index material. In other embodiments, the low index material includes two adjacently placed transparent low index materials. In yet other embodiments, the low index material includes a transparent low index material and an adjacently placed light-absorbing low index material.

In certain preferred embodiments, which do not fall under the scope of the claims, the LOE is configured to perform one-dimensional aperture expansion, whereas in other preferred embodiments, which fall under the scope of the claims, the LOE is configured to perform two-dimensional aperture expansion. In embodiments in which the LOE performs two-dimensional aperture expansion, a first region of the LOE performs a first stage of aperture expansion and a second region of the LOE performs a second stage of aperture expansion. In embodiments falling under the scope of the claims, in which the LOE performs two-dimensional aperture expansion, a light-absorbing material is deployed at the portion of the low index material that is attached to the first region of the LOE. As mentioned, in certain embodiments, more than one low index material is used to encapsulate the LOE. Such embodiments are particularly useful in combination with embodiments in which the LOE performs two-dimensional aperture expansion whereby a first low index material is attached to a first region of the LOE that performs a first stage of aperture expansion, and a second low index material is attached to a second region of the LOE that performs a second stage of aperture expansion. In certain embodiments, both the first and second low index materials are transparent materials, and a light-absorbing material is deployed at the first low index material. In other embodiments, the second low index material is a transparent material and the first low index material is a light-absorbing material having inherently low refractive index.

According to the teachings of an embodiment of the present invention, there is provided optical device for directing image illumination towards a user for viewing. The optical device comprises: a light-guide optical element (LOE) formed from a light-transmitting material having a first refractive index, the LOE including a plurality of surfaces including a pair of parallel major external surfaces for guiding image illumination within the LOE by total internal reflection at the major external surfaces, the LOE further including at least one optical coupling configuration for deflecting a proportion of the image illumination that is guided within the LOE by total internal reflection at the major external surfaces; and an optical material including at least one transparent material directly attached to the LOE at least at the major external surfaces so as to be in direct contact with the major external surfaces and so as to at least partially encapsulate the LOE, the optical material having a second refractive index that is less than the first refractive index so as to maintain conditions of total internal reflection at the major external surfaces, and the image illumination that is guided within the LOE by total internal reflection at the major external surfaces is incident to the major external surfaces at a range of angles greater than a critical angle defined by the first and second refractive indices, and the angles greater than the critical angle include shallow angles measured relative to the major external surfaces.

Optionally, the at least one transparent material is formed from a solid-state material.

Optionally, the at least one transparent material is formed from one or more layers of optical adhesive.

Optionally, the at least one transparent material is a thin coating layer of a polymer or dielectric material.

Optionally, the optical material has a thickness that is sufficiently small such that surface patterns of the optical material follow blemish patterns at the major external surfaces.

Optionally, the thickness is in a range from 2 $\mu$m to 20 $\mu$m.

Optionally, the first refractive index is in a range from 1.5 to 1.8.

Optionally, the second refractive index is in a range from 1.3 to 1.4.

In embodiments not falling under the scope of the claims, the at least one optical coupling configuration includes exactly one optical coupling configuration that deflects the proportion of the image illumination that is guided within the LOE by total internal reflection at the major external surfaces out of the LOE towards the user.

Optionally, the optical coupling configuration is implemented as a plurality of mutually parallel partially reflecting surfaces deployed within the LOE and oblique to the major external surfaces.

Optionally, the optical coupling configuration is implemented as at least one diffractive element associated with one of the major external surfaces.

According to the claimed invention, the LOE includes a first region and a second region, and the at least one optical coupling configuration includes a first optical coupling configuration located in the first region and a second optical coupling configuration located in the second region, the second optical coupling configuration configured for deflecting a part of the image illumination that is guided within the LOE by total internal reflection at the major external surfaces from the first region to the second region out of the LOE towards the user, and the first optical coupling configuration configured for deflecting a part of the image illumination that is guided within the first region by total internal reflection at the major external surfaces towards the second region.

Optionally, the first optical coupling configuration is implemented as a first plurality of mutually parallel partially reflecting surfaces having a first orientation, and the second optical coupling configuration is implemented as a second plurality of mutually parallel partially reflecting surfaces having a second orientation that is nonparallel to the first orientation.

Optionally, the first optical coupling configuration is implemented as a first at least one diffractive element associated with one of the major external surfaces, and the second optical coupling configuration is implemented as a second at least one diffractive element associated with one of the major external surfaces.

According to the claimed invention, the optical device further comprises: a light-absorbing material deployed in association with one or more portions of the at least one transparent material in the first region.

Optionally, the light-absorbing material has a refractive index that is equal to the first refractive index or no more than 10% greater than the first refractive index.

Optionally, the optical device further comprises: at least one optical element attached to the at least one transparent material.

Optionally, the at least one optical element includes: a lens attached to a first portion of the at least one transparent material that is directly attached to a first of the major external surfaces, and a protective film attached to a second portion of the at least one transparent material that is directly attached to a second of the major external surfaces.

Optionally, the at least one optical element includes: a first lens attached to a first portion of the at least one transparent material that is directly attached to a first of the major external surfaces, and a second lens attached to a second portion of the at least one transparent material that is directly attached to a second of the major external surfaces.

Optionally, the at least one optical element includes: a first protective film attached to a first portion of the at least one transparent material that is directly attached to a first of the major external surfaces, and a second protective film attached to a second portion of the at least one transparent material that is directly attached to a second of the major external surfaces.

Optionally, the LOE is a pre-cut LOE that is cut from a precursor LOE prior to the optical material being directly attached to the LOE such that the LOE includes substantially only an active area in which the image illumination propagates, and one or more perimeter edges of the LOE are coated with at least one layer of opaque material.

There is also provided according to an embodiment of the teachings of the present invention a method for fabricating an optical device that directs image illumination towards a user for viewing. The method comprises: obtaining a light-guide optical element (LOE) formed from a light-transmitting material having a first refractive index, the LOE including a plurality of surfaces including a pair of parallel major external surfaces for guiding image illumination within the LOE by total internal reflection at the major external surfaces, the LOE further including at least one optical coupling configuration for deflecting a proportion of the image illumination that is guided within the LOE by total internal reflection at the major external surfaces, and the image illumination that is guided within the LOE by total internal reflection at the major external surfaces is incident to the major external surfaces at a range of angles greater than a critical angle defined by the first and second refractive indices, and the angles greater than the critical angle include shallow angles measured relative to the major external surfaces; and directly attaching an optical material that includes at least one transparent material to the LOE at least at the major external surfaces such that the optical material directly contacts the major external surfaces and at least partially encapsulates the LOE, the optical material having a second refractive index that is less than the first refractive index so as to maintain conditions of total internal reflection at the major external surfaces.

Optionally, the LOE includes an active area in which the image illumination propagates and an inactive area in which the image illumination does not propagate or in which the image illumination is not directed towards the user, and the method further comprises: prior to directly attaching the optical material to the LOE: modifying the LOE to remove the inactive area such that substantially only the active area of the LOE remains, thereby producing a modified LOE, and coating one or more perimeter edges of the modified LOE with at least one layer of opaque material

Optionally, the optical material is additionally directly attached to the opaque material at the one or more perimeter edges of the modified LOE.

Optionally, the method further comprises: cutting or trimming the optical material to achieve a contour of an eyepiece.

Optionally, the method further comprises: attaching at least one optical element to the at least one transparent material.

Optionally, the at least one optical element includes: a lens attached to a first portion of the at least one transparent material that is directly attached to a first of the major external surfaces, and a protective film attached to a second portion of the at least one transparent material that is directly attached to a second of the major external surfaces.

Optionally, the at least one optical element includes: a first lens attached to a first portion of the at least one transparent material that is directly attached to a first of the major external surfaces, and a second lens attached to a second portion of the at least one transparent material that is directly attached to a second of the major external surfaces.

Optionally, the at least one optical element includes: a first protective film attached to a first portion of the at least one transparent material that is directly attached to a first of the major external surfaces, and a second protective film attached to a second portion of the at least one transparent material that is directly attached to a second of the major external surfaces.

According to the claimed invention, the LOE includes a first region and a second region, and the at least one optical coupling configuration includes a first optical coupling configuration located in the first region and a second optical coupling configuration located in the second region, the second optical coupling configuration configured for deflecting a part of the image illumination that is guided within the LOE by total internal reflection at the major external surfaces from the first region to the second region out of the LOE towards the user, and the first optical coupling configuration configured for deflecting a part of the image illumination that is guided within the first region by total internal reflection at the major external surfaces towards the second region, and the method further comprises: deploying a light-absorbing material in association with one or more portions of the at least one transparent material in the first region.

Optionally, the light-absorbing material has a refractive index that is equal to the first refractive index or no more than 10% greater than the first refractive index.

Optionally, directly attaching the at least one transparent material to the LOE includes performing a process selected from the group consisting of: dip-coating, spin coating, bonding, and molding.

There is also provided according to an embodiment of the teachings of the present invention an optical device for directing image illumination towards a user for viewing. The optical device comprises: a light-guide optical element (LOE) formed from a light-transmitting material having a first refractive index, the LOE including: a plurality of surfaces including at least one pair of parallel major external surfaces for guiding image illumination within the LOE by total internal reflection at the major external surfaces, a first region and a second region, and a first optical coupling configuration located in the first region and a second optical coupling configuration located in the second region, the second optical coupling configuration configured for deflecting a part of the image illumination that is guided within the LOE by total internal reflection at the major external surfaces from the first region to the second region out of the LOE towards the user, and the first optical coupling configuration configured for deflecting a part of the image illumination that is guided within the first region by total internal reflection at the major external surfaces towards the second region; a transparent material directly attached to the LOE at least at the major external surfaces so as to be in direct contact with the major external surfaces and so as to at least partially encapsulate the LOE, the transparent material having a second refractive index that is less than the first refractive index so as to maintain conditions of total internal reflection at the major external surfaces; and a light-absorbing material deployed in association with one or more portions of the transparent material in the first region.

There is also provided according to an embodiment of the teachings of the present invention an optical device for directing image illumination towards a user for viewing. The optical device comprises: a light-guide optical element (LOE) formed from a light-transmitting material having a first refractive index, the LOE including: a plurality of surfaces including at least one pair of parallel major external surfaces for guiding image illumination within the LOE by total internal reflection at the major external surfaces, a first region and a second region, and a first optical coupling configuration located in the first region and a second optical coupling configuration located in the second region, the second optical coupling configuration configured for deflecting a part of the image illumination that is guided within the LOE by total internal reflection at the major external surfaces from the first region to the second region out of the LOE towards the user, and the first optical coupling configuration configured for deflecting a part of the image illumination that is guided within the first region by total internal reflection at the major external surfaces towards the second region; a light-absorbing material directly attached to the LOE at the major external surfaces in the first region so as to be in direct contact with the major external surfaces in the first region; and a transparent material directly attached to the LOE at the major external surfaces in the second region so as to be in direct contact with the major external surfaces in the second region, the transparent material and the light-absorbing material cooperating to at least partially encapsulate the LOE, and each of the transparent material and the light-absorbing material having a refractive index that is less than the first refractive index so as to maintain conditions of total internal reflection at the major external surfaces.

There is also provided according to an embodiment, which does not fall under the scope of the claims, an optical device for directing image illumination towards a user for viewing. The optical device comprises: a light-guide optical element (LOE) formed from a light-transmitting material having a first refractive index, the LOE including: a plurality of surfaces including at least one pair of parallel major external surfaces for guiding image illumination within the LOE by total internal reflection at the major external surfaces, a first region and a second region, and a first optical coupling configuration located in the first region and a second optical coupling configuration located in the second region, the second optical coupling configuration configured for deflecting a part of the image illumination that is guided within the LOE by total internal reflection at the major external surfaces from the first region to the second region out of the LOE towards the user, and the first optical coupling configuration configured for deflecting a part of the image illumination that is guided within the first region by total internal reflection at the major external surfaces towards the second region; at least one transparent material directly attached to the LOE at least at the major external surfaces so as to be in direct contact with the major external surfaces and so as to at least partially encapsulate the LOE, the at least one transparent material having a second refractive index that is less than the first refractive index so as to maintain conditions of total internal reflection at the major external surfaces; at least one protective film associated at least with a portion of the at least one transparent material such that the at least one protective film is associated with a portion of at least one of the major external surfaces in the first region; and a coating deployed on at least a portion of the at least one protective film such that the coating is associated with the portion of the at least one transparent material.

Optionally, in any one of the optical devices according to embodiments of the present invention the first region is configured as a first LOE section having two pairs of parallel major external surfaces forming a rectangular cross-section such that the image illumination propagates through the first LOE section by total internal reflection at the two pairs of parallel major external surfaces.

Within the context of this document, the term "guided" generally refers to light that is trapped within a light-transmitting material (e.g., a substrate) by total internal reflection at major external surfaces of the light-transmitting material such that the light that is trapped within the light-transmitting material propagates in a propagation direction through the light-transmitting material.

Unless otherwise defined herein, all technical and/or scientific terms used herein have the same meaning as commonly understood by one of ordinary skill in the art to which the invention pertains. Although methods and materials similar or equivalent to those described herein may be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE DRAWINGS

Some embodiments of the present invention are herein described, by way of example only, with reference to the accompanying drawings. With specific reference to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

Attention is now directed to the drawings, where like reference numerals or characters indicate corresponding or like components. In the drawings:

FIG. 1 is a schematic side view of an optical device having a light-guide optical element (LOE), having a pair of parallel faces and partially-reflecting surfaces oblique to the parallel faces, that can be used with embodiments of the present invention;

FIGS. 2A - 2C are schematic side, plan, and front views, respectively, of an optical device having an LOE similar to the LOE of FIG. 1, encapsulated by a capsule formed from a transparent material having a refractive index lower than the refractive index of the LOE, according to embodiments not encompassed by the wording of the claims but considered as useful for understanding the invention;

FIG. 3 is a schematic front view similar to FIG. 2C, but showing active and inactive areas of the LOE;

FIG. 4A is a schematic front view of an LOE that has been trimmed or cut to remove the inactive area;

FIG. 4B is a schematic front view of the LOE of FIG. 4A, showing perimeter edges of the LOE onto which a coating of opaque material has been applied;

FIGS. 4C and 4D are schematic front and plan views, respectively, of the LOE of FIG. 4B encapsulated by a capsule formed from a transparent material having a refractive index lower than the refractive index of the LOE;

FIG. 4E is a schematic front view of the encapsulated LOE of FIGS. 4C and 4D, showing the capsule after having been trimmed or cut to have an eyepiece contour;

FIG. 4F is a schematic front view of an encapsulated LOE similar to FIG. 4E, but showing the encapsulated LOE after being modified to include a coupling-in region that can accommodate an optical coupling-in configuration;

FIGS. 5A and 5B are schematic side and plan views, respectively, of an encapsulated LOE having a lens and a protective film respectively attached to first and second surfaces of the capsule;

FIGS. 6A and 6B are schematic side and plan views, respectively, of an encapsulated LOE having first and second protective films respectively attached to first and second surfaces of the capsule;

FIGS. 7A and 7B are schematic side and plan views, respectively, of an encapsulated LOE having first and second lenses respectively attached to first and second surfaces of the capsule;

FIGS. 8A and 8B are schematic side and plan views, respectively, of an encapsulated LOE having first and second lenses, each having a protective coating or film applied thereto, respectively attached to first and second surfaces of the capsule;

FIGS. 9A and 9B are schematic front and side views, respectively, of an optical device having an LOE configured for performing two-dimensional aperture expansion encapsulated by a capsule formed from a transparent material having a refractive index lower than the refractive index of the LOE, according to embodiments not encompassed by the wording of the claims but considered as useful for understanding the invention;

FIG. 10 is a schematic front view of the encapsulated LOE of FIGS. 9A and 9B, showing the capsule after having been trimmed or cut to have an eyepiece contour;

FIG. 11 is a schematic side view of an encapsulated LOE similar to FIG. 9B, showing a lens and a protective film respectively attached to first and second surfaces of the capsule;

FIG. 12 is a schematic partial side view of the LOE of FIGS. 9A and 9B, showing escaped light from the LOE reflected back into the LOE by an external surface of the capsule, and also showing light from an external scene reflected toward a user by an optical coupling configuration associated with the LOE;

FIGS. 13A and 13B are schematic front and side views similar to FIGS. 9A and 9B, showing a light-absorbing material associated with portions of the transparent material that form the capsule, according to embodiments of the claimed invention;

FIG. 14 is a schematic partial side view of the LOE of FIGS. 13A and 13B, showing the light-absorbing material absorbing escaped light from the LOE and light from an external scene, according to embodiments of the present invention;

FIG. 15 is a schematic side view showing an encapsulated LOE similar to as shown in FIG, 9B, but in which the capsule is formed from two transparent materials each having a refractive index lower than the refractive index of the LOE;

FIGS. 16A and 16B are schematic side and plan views, respectively, of an encapsulated LOE similar to the LOE shown in FIG. 15, but also showing a protective film on the transparent materials on one side of the LOE and an additional coating layer on a portion of the protective film, according to embodiments not encompassed by the wording of the claims but considered as useful for understanding the invention;

FIGS. 17A and 17B are schematic side and front views, respectively, of an optical device having an LOE configured for performing two-dimensional aperture expansion encapsulated by a capsule formed from first and second transparent materials each having a refractive index lower than the refractive index of the LOE, according to another embodiment not encompassed by the wording of the claims but considered as useful for understanding the invention;

FIG. 18 is a schematic side view of the optical device of FIGS. 17A and 17B, additionally showing a lens and a protective film respectively attached to portions of the first and second surfaces of the capsule; and

FIG. 19 is a schematic side view of the optical device of FIGS. 17A and 17B, additionally showing a light-absorbing material associated with portions of the first transparent material of the capsule, according to embodiments of the claimed invention.

## DESCRIPTION OF THE PREFERRED EMBODIMENTS

Embodiments of the present invention provide encapsulated light-guide optical elements (LOEs), optical devices having encapsulated LOEs, methods of fabricating optical devices having encapsulated LOEs, and methods of encapsulating LOEs. The encapsulated LOEs according to the embodiments of the present invention are particularly suitable for use as part of a near eye display or head up display for augmented reality applications.

The principles and operation of the LOEs, optical devices and methods according to embodiments of the present invention may be better understood with reference to the drawings accompanying the description.

Before explaining at least one embodiment of the invention in detail, it is to be understood that the invention is not necessarily limited in its application to the details of construction and the arrangement of the components and/or methods set forth in the following description and/or illustrated in the drawings and/or the examples. The invention is capable of other embodiments or of being practiced or carried out in various ways. Initially, throughout this document, references are made to directions, such as, for example, front and back, and the like. These directional references are exemplary only, and are used only for ease of presentation and refer to the arbitrary orientations as illustrated in the drawings. The LOEs and optical devices may be deployed in any required orientation.

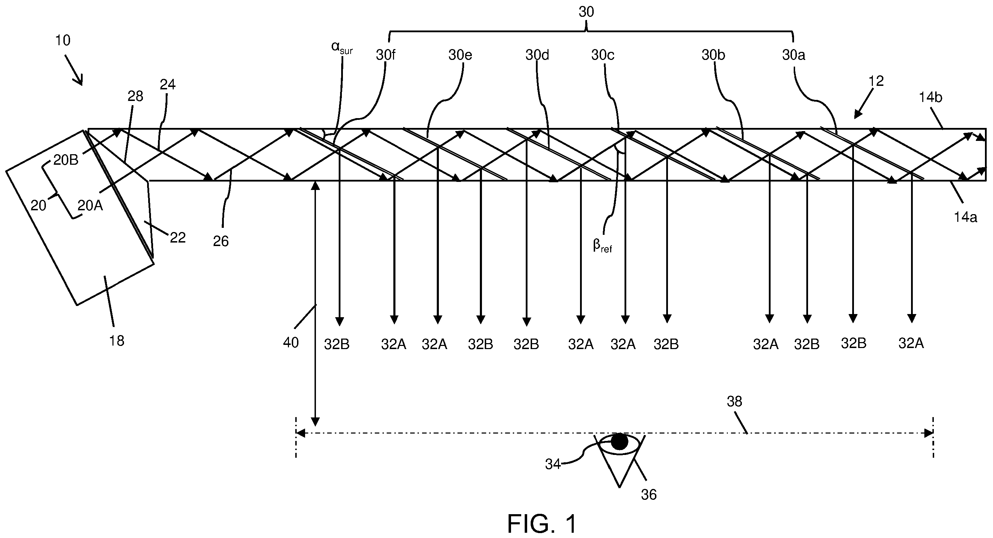

By way of introduction, FIG. 1 schematically illustrates a light-guide optical element (LOE) 12 that can be used with embodiments of the present invention. Initially, it is noted that the LOE 12 in FIG. 1 is part of an optical device 10 that can include other optical components besides the LOE 12, most notably an image projector 18 and an optical coupling-in configuration 22. Such components may also be present in optical devices constructed and operative according to embodiments of the present invention.

The LOE 12 is formed as a parallel-faced slab (also referred to as a substrate) of transparent (i.e., light-transmitting) material within which image illumination propagates (i.e., is guided) by total internal reflection at external surfaces of the slab. In this particular embodiment, the LOE 12 has a plurality of surfaces including a pair of planar parallel major external surfaces (faces) 14a, 14b for guiding the image illumination (light) by total internal reflection.

The image projector 18 generates an image 20, as represented here schematically by a beam of illumination 20 including sample rays 20A and 20B which span the beam. The image 20 is coupled into the LOE 12 by the optical coupling-in configuration 22, as illustrated here schematically by a coupling prism 22 (although any suitable coupling-in arrangement, including coupling reflectors and diffractive gratings, can be used), so as to generate reflected rays 24 which are trapped by total internal reflection within the LOE 12, generating also rays 26. Here, the coupling prism 22 includes three major surfaces, one of which is located next to (or is common with) a slant edge 28 of the LOE 12 (where the edge 28 is at an oblique angle to the major external surfaces 14a, 14b).

The coupled-in image 20 propagates along the LOE 12 by repeated total internal reflection from the major external surfaces 14a, 14b, impinging on an optical coupling-out configuration 30, as illustrated here schematically by a sequence of mutually parallel partially reflecting internal surfaces 30a, 30b, 30c, 30d, 30e, 30f (collectively designated 30) at an oblique angle ($\alpha_{sur}$) to the major external surfaces 14a, 14b, where part of the image intensity is reflected so as to be deflected (coupled out) of the substrate as rays **32**A and **32**B toward the pupil **34** of an eye **36** (of an observer / user) that is located in eye motion box (EMB) **38** at a an eye relief (ER) distance **40** from the major external surface **14**a. The transparency of the LOE **12** enables the observer to view the coupled-out image **20** overlaid on the view of the external scene (i.e., real-world scene) at the front side of the LOE **12** (i.e., at the face **14**b), which is of particular use when the optical device **10** is deployed as part of an augmented reality (AR) system.

In order to minimize unwanted reflections of the image **20** which might give rise to ghost images, the partially reflecting internal surfaces (also referred to herein as "facets") **30** are preferably coated with reflective coating so as to have low reflectance for a first range of incident angles, while having the desired partial reflectivity for a second range of incident angles, where a ray with a small inclination to the normal to a partially reflecting surface **30** (represented here as angle $\beta_{ref}$) is split in order to generate a reflected ray for coupling out, while a high inclination (to the normal) ray is transmitted with negligible reflection.

The image **20** is a collimated image, i.e., where each pixel is represented by a beam of parallel rays at a corresponding angle, equivalent to light from a scene far from the observer (the collimated image is referred to as being "collimated to infinity"). The image is represented here simplistically by rays corresponding to a single point in the image, typically a centroid of the image, but in fact includes a range of angles to each side of this central beam, which are coupled into the substrate with a corresponding range of angles, and similarly coupled out at corresponding angles, thereby creating a field of view (FOV) corresponding to parts of the image arriving in different directions to the eye **36** of the observer.

Although the image projector **18** is schematically illustrated here as a rectangle, the image projector **18** includes at least one light source, typically deployed to illuminate a spatial light modulator, such as an LCOS chip. The spatial light modulator modulates the projected intensity of each pixel of the image, thereby generating an image. Alternatively, the image projector may include a scanning arrangement, typically implemented using a fast-scanning mirror, which scans illumination from a laser light source across an image plane of the projector while the intensity of the beam is varied synchronously with the scanning motion on a pixel-by-pixel basis, thereby projecting a desired intensity for each pixel. In both cases, collimating optics are provided to generate an output projected image which is collimated to infinity. Some or all of the above components are typically arranged on surfaces of one or more polarizing beam splitter (PBS) cube or other prism arrangement, as is well known in the art

The performance of the LOE **12** is strongly dependent on the total internal reflection (TIR) of the image illumination across the entire desired field. As is known in the art, the principles of TIR are governed by critical angle, which is determined by the refractive index of the material from which the LOE **12** is constructed (typically glass, for example BK7 which has a refractive index of approximately 1.52) and the refractive index of the surrounding medium contacting the LOE **12.** Specifically, the critical angle for light propagation through he LOE is defined as $\theta_c = \sin^{-1} \frac{\eta_m}{\eta_L}$ , where $\eta_m$ is the refractive index of the medium surrounding the LOE, and $\eta_L$ is the refractive index of the LOE. For example, if the LOE is constructed from BK7 and the medium immediately contacting the major external surfaces **14a, 14b** is air (which has a refractive index that is practically unity, i.e., a refractive index of 1), then $\theta_c = \sin^{-1} \frac{1}{1.52} \approx 41.1°$ .

Thus, the performance of the LOE **12** is generally determined by the angles of the propagating light field within the LOE **12,** and the refractive indices of the LOE **12** and the surrounding medium.

In conventional optical devices that utilize LOEs to perform aperture multiplication (i.e., aperture expansion), such as the optical device **10** of FIG. 1, the surrounding medium that contacts the major surfaces **14**a, **14**b of the LOE is typically air. This can present problems in several respects. In one respect, directly contacting the major surfaces **14**a, **14**b of the LOE with air can leave the LOE exposed to the environment thus leaving the LOE unprotected from damage and reducing the overall mechanical stability of the optical device. This also reduces the mechanical contact area of the LOE to other functional or mechanical elements, such a mechanical body that supports the LOE, in particular eyeglass frames in which the LOE can be mounted in certain near-eye display implementations. In another respect, deployment of additional optical elements, such as lenses or optical films, to the major external surfaces **14**a, **14**b while maintaining a small form factor and good optical performance can be particularly difficult. For example, direct bonding of additional optical elements to the major LOE surfaces can negatively impact TIR due to the refractive index of the bonding material (e.g., optical cement), which is less than the refractive index of the LOE but is typically higher than that of air and therefore increases critical angle thereby reducing the effective FOV. Conditions of TIR with lower critical angle can be maintained with an air gap between the additional optical element and the LOE **12,** however such air gaps increase the thickness of the optical device resulting in a bulkier device, and also reduce the mechanical stability of the device.

In order to overcome these limitations, embodiments of the present invention provide an LOE that is formed from a material having a moderate to moderately high refractive index, and that is at least partially encapsulated in an encapsulation structure formed from optical material, that includes at least one transparent material, having a lower refractive index than the LOE but still greater than unity.

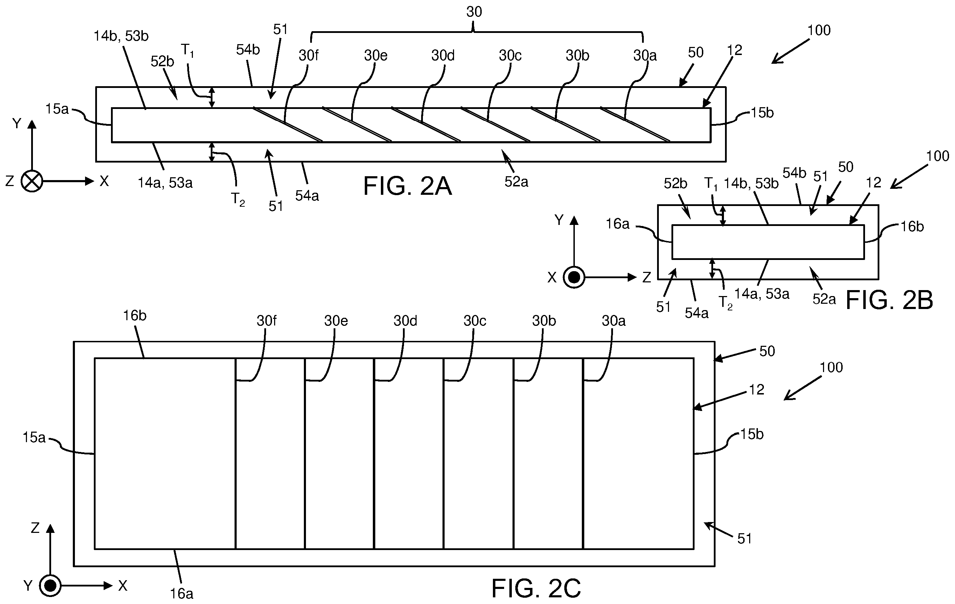

Turning now to FIGS. 2A - 2C, there is schematically illustrated an optical device, generally designated **100,** constructed and operative according to an embodiment of the present invention. Here, the optical device **100** includes LOE **12,** and also includes an encapsulation structure **50** that is formed from optical material **51** that encapsulates the LOE **12.** The optical device **100** can be shaped to approximately form of an eyepiece, that is an eyepiece that is part of a near-eye display, for example as part of an eyeglasses form factor. It is noted that the LOE illustrated in FIGS. 2A - 2C is similar in structure to the LOE illustration FIG. 1 with the notable exceptions that the LOE illustrated in FIGS. 2A - 2C is not shown with a slant edge, and no optical coupling-in configuration is shown in FIGS. 2A - 2C. This is for clarity of presentation only, as encapsulated LOEs according to embodiments of the present disclosure may include one or more slant edges (i.e., edges or surfaces that are oblique to the parallel surfaces **14**a, **14**b), and optical coupling-in configurations used with encapsulated LOEs will be discussed in subsequent sections of the present disclosure.

Also illustrated in FIGS. 2A - 2C are two additional sets of external surfaces **15**a, **15**b and **16**a, **16**b of the LOE **12.** These surfaces **15**a, **15**b, **16**a, **16**b are also referred to as perimeter surfaces / edges or peripheral surfaces / edges **15**a, **15**b, **16**a, **16**b. Each of the pairs of surfaces **15**a, **15**b and **16**a, **16**b can, in certain embodiments, be a pair of parallel surfaces. In certain embodiments, both pairs of surfaces **14**a, **14**b and **15**a, **15**b is a pair of parallel surfaces and the three pairs of surfaces **14**a, **14**b, **15**a, **15**b, **16**a, **16**b are mutually perpendicular.

The encapsulation structure **50** (also referred to herein interchangeably as a "capsule") and the LOE **12** are arranged such that the optical material **51** of the capsule **50** is directly attached to the LOE **12** at least at the major external surfaces **14**a, **14**b so as to be in direct contact (i.e., at a direct abutment) with the major external surfaces **14**a, **14**b, thereby encapsulating the LOE **12.** By direct contact, it is meant that no intermediate layer(s) of material(s) is/are present between the optical material **51** of the capsule **50** and the major external surfaces **14**a, **14**b of the LOE **12.** Such intermediate materials include solid materials, semi-solid materials, as well as air. Therefore, it should be made clear that a key distinction of the encapsulated LOEs according to embodiments of the present invention is that no air gap is present between the optical material **51** of the capsule **50** and the major external surfaces **14**a, **14**b of the LOE **12.**

In certain embodiments of the present invention, the LOE **12** is formed from a light-transmitting material having a moderate to moderately high refractive index, preferably a refractive index that falls in a range from 1.5 to 1.8 (i.e., $1.5 \leq \eta_L \leq 1.8$). The encapsulation structure **50** is formed from an optical material **51** having a refractive index that is less than the refractive index of the LOE but is still greater than the refractive index of air (i.e., greater than unity). In preferred embodiments, the encapsulation structure **50** is formed from an optical material **51** having a refractive index that falls in a range from 1.1 to 1.4 (i.e., $1.1 \leq \eta_m \leq 1.4$), more preferably in a range from 1.2 to 1.4 (i.e., $1.2 \leq \eta_m \leq 1.4$), and most preferably in a range from 1.3 to 1.4 (i.e., $1.3 \leq \eta_m \leq 1.4$). In one non-limiting embodiment, the encapsulation structure **50** is formed from a transparent material in the form of an optical adhesive having a refractive index of approximately 1.34 (i.e., $\eta_L$ = 1.34), for example an optical adhesive available from Norland Products, Inc. of Jamesburg, NJ, USA. A detailed discussion of the types of transparent materials from which the capsule **50** can be formed is provided in subsequent sections of the present disclosure.

The optical material from which the encapsulation structure **50** is formed is referred to interchangeably herein as a low index material **51.** Within the context of the present document, the term "low" in the expression "low index" is taken relative to the refractive index of the LOE **12.** In other words, the optical material **51** has a low refractive index in comparison to the refractive index of the LOE **12,** i.e., the optical material has a lower refractive index than the refractive index of the LOE **12** (preferably the optical material has a refractive index that is at least approximately 7% lower than the refractive index of the LOE).

In the disclosed embodiments, the optical material **51** includes at least one transparent material. As will be discussed, in certain embodiments, a single transparent material is used to encapsulate the LOE. In other embodiments, two transparent materials (arranged adjacent to each other) are used to encapsulate the LOE. In yet other embodiments, a transparent material and a light-absorbing material are used to encapsulate the LOE. All such transparent materials and light-absorbing materials used for encapsulation according to the embodiments of the present invention are low index materials in accordance with the definition of low index material defined above.

By constructing the LOE **12** from a moderate to moderately high refractive index material and providing a capsule **50** formed from a low index material **51,** conditions of TIR can be maintained with a usable critical angle when the LOE **12** is encapsulated in the capsule **50.** For example, using the extreme values of the refractive index ranges above as a basis, a critical angle in a range from approximately 37.7° (when $\eta_m$ = 1.1 and $\eta_L$ = 1.8) to 69° (when $\eta_m$ = 1.4 and $\eta_L$ = 1.5) can be achieved.

In certain embodiments, it may be desirable to inject image illumination into the LOE **12** such that the injected illumination propagates by TIR and is incident to the major surfaces **14**a, **14**b at a range of angles that are greater than the critical angle, including shallow angles which are measured relative to the planes of the major external surfaces **14**a, **14**b. These shallow angles correspond to high angle of incidence (AOI), preferably AOIs in a range between 60° to 80°. The propagation of image illumination within the LOE by TIR at angles greater than the critical angle that include shallow angles has an advantageous effect of including a larger portion of the light field of the image. This may be of particular value in situations in which the critical angle is larger than a preferred angle (e.g., larger than 50°) which results in a larger portion of the light field being below the critical angle and thus not being trapped in the LOE **12**. Injecting the image illumination into the LOE such that the image illumination is trapped within the LOE by TIR at the major surface **14**a, **14**b and such that the propagating image illumination is incident to the major surfaces **14**a, **14**b at a range of angles that are greater than the critical angle that include shallow angles can be accomplished by appropriately designing the optical coupling-in configuration, for example by appropriately designing the angle of a coupling-in prism or coupling-in reflector.

It is noted that in FIGS. 2A - 2C, the LOE **12** is shown as being encapsulated by the capsule **50** such that in addition to being in direct contact with the of the surfaces **14**a, **14**b, the low index material **51** is also in direct contact with the entirety of the surfaces **15**a, **15**b (as seen in FIGS. 2A and 2C) as well as the entirety of the surfaces **16**a, **16**b (as seen in FIGS. 2B and 2C). Despite FIGS. 2A - 2C showing direct contact of the low index material with the surfaces **15**a, **15**b, **16**a, **16**b, this contact is only optional, and encapsulation at the major external surfaces **14**a, **14**b is the preferred minimum amount of encapsulation as this encapsulation provides the necessary working conditions for TIR. In fact, in certain non-limiting implementations it may be more practical to encapsulate the LOE such that the low index material is only attached at the major surfaces of the LOE.

In certain preferred embodiments, the encapsulation at the major external surfaces **14**a, **14**b is a full encapsulation whereby a layer of the low index material **51** extends across the entirety of the length of each the major external surfaces **14**a, **14**b. However, in other preferred embodiments the low index material may (in certain cases) partially extend across the length of the major external surfaces **14**a, **14**b thereby possibly leaving end portions (just before the surfaces **15**a, **15**b) of the LOE **12** uncontacted by the low index material. Preferably, the partial extension covers the portions of the major external surfaces **14**a, **14**b through which the image illumination propagates and ultimately reaches the eye of the observer. Preferably, this partial extension is across the vast majority (or bulk) of the length of the major external surfaces **14**a, **14**b (where vast majority of the length refers to preferably at least 80% of the length, and more preferably at least 90% of the length, and even more preferably at least 95% of the length). In these "partial extension" embodiments, the LOE is considered to be "partially encapsulated".

In the arbitrarily labeled xyz coordinate system used in the drawings, the "length" is measured along the x-dimension. It is also noted that the low index material **51** preferably extends across the entirety of the major external surfaces **14**a, **14**b in the transverse direction (perpendicular to the length), which in the arbitrarily labeled xyz coordinate system used in the drawings is measured along the z-dimension. In other words, the low index material preferably extends just up to the edges **16**a, **16**b.

As stated above, in certain non-limiting embodiments the low index material extends just up to the edges **15**a, **15**b in the length dimension (x-dimension in the drawings). However, in certain cases the low index material may extend beyond the edges **15**a, **15**b in the length dimension (x-dimension in the drawings) such that portions of the low index material are in direct contact with the edges **15**a, **15**b. In certain cases the low index material may also extend beyond the edges 16a, 16b in the transverse dimension (z-dimension in the drawings) such that portions of the low index material are in direct contact with the edges 16a, 16b.

The layer (or layers) of the low index material 51 of the capsule 50 that extends across the length of the surface 14a corresponds to a first region 52a of the capsule 50 that is directly attached to the surface 14a. Similarly, the layer (or layers) of the low index material 51 of the capsule 50 that extends across the length of the surface 14b corresponds to a second region 52b of the capsule 50 that is directly attached to the surface 14b. The low index material 51 has interior/internal contact portions that directly contact the LOE at the major external surfaces 14a, 14b. These interior/internal contact portions are also referred to as "interfacing" portions. A first of the contact portions 53a is in the first region 52a of the low index material 51, and directly contacts the LOE **12** at the surface **14**a so as to form an interface between the low index material **51** and the surface **14**a of the LOE **12**. Similarly, a second of the contact portions **53**b of the interfacing portion is in the first region **52**a of the low index material **51,** and directly contacts the LOE **12** at the surface **14**b so as to form an interface between the low index material **51** and the surface **14**b of the LOE **12.** The image illumination that is injected into the LOE **12** is thus guided (i.e., propagates) by TIR at the major external surfaces **14**a, **14**b, and by equivalence is guided by TIR at the interfaces between the low index material **51** and the surfaces **14**a, **14**b.

Each of the regions **52**a, **52**b of the low index material **51** has an associated thickness. Specifically, the region **52**a has an associated thickness $T_1$ that is measured between the surface **14**a (and equivalently the contact portion **53**a of the interfacing portion) and an external surface **54**a of the low index material **51** of the capsule **50**. Similarly, the region **52**b has an associated thickness $T_2$ that is measured between the surface **14**b (and equivalently the contact portion **53**b of the interfacing portion) and the external surface **54**b of the low index material **51** of the capsule **50.**

Similar principles apply in cases where there is direct contact of the low index material at one or more of the other surfaces **15**a, **15**b, **16**a, **16**b of the LOE **12**. For example, the low index material may have additional interfacing portions that directly contact the remaining surfaces **15**a, **15**b, **16**a, **16**b of the LOE **12**. These additional interfacing portions are in regions of the capsule **50,** parts of which may overlap with the regions **52**a, **52**b.

It is noted that although the external surfaces of the capsule 5**0** (e.g., surface **54**a, surface **54**b, and other external surfaces which are not labeled in the drawings) are shown as planar surfaces, one or more (and in some cases all) of the external surfaces of the capsule can be curved or otherwise non-planar surfaces.

Parenthetically, the dimensions of the LOE **12** and the capsule **50,** including the thicknesses of the two regions **52**a, **52**b, are exaggerated for clarity in the drawings in order to better explain the principles of the present invention. Generally speaking, the thickness of the low index material **51** at the regions **52**a, **52**b can be as small as 2 $\mu$m and can be as large as permitted by optical design and manufacturing constraints. However, in certain embodiments the thickness of the low index material **51** preferably does not exceed 100 $\mu$m, i.e., the thickness of the low index material **51** is preferably in a range between 2 $\mu$m to 100 $\mu$m. In fact, it may be particularly advantageous to keep the thickness of the two regions **52**a, **52**b relatively small, more preferably in a range between 2 $\mu$m to 20 $\mu$m, and even more preferably in a range between 2 $\mu$m to 10 $\mu$m, which can increase optical performance while at the same time reduce the overall bulk of the optical device. Preferably, the thickness of the low index material **51** at the surfaces **14**a, 14**b** is sufficiently small such that surface patterns of the low index material **51** follow blemish patterns at the surfaces **14**a, **14**b. These blemish patterns are typically micron-level imperfections at the surfaces **14**a, **14**b, for example in the form minor indentations along various portions of the surfaces **14**a, **14**b, and may emerge during the manufacturing process of the LOE **12,** for example during polishing stages. The blemish patterns may result in a proportion of intensity of the image illumination that is TIR-guided through the LOE **12** escaping out of the LOE **12**. If the low index material **51** is too thick, image illumination that escapes the LOE **12** may be reflected by the low index material back into the LOE **12** at unwanted angles, potentially resulting in ghost images and reducing optical performance. By making the low index material thin enough, more preferably in a range between 2 $\mu$m to 20 $\mu$m, and even more preferably in a range between 2 $\mu$m to 10 $\mu$m, surface patterns of the low index material will follow the blemish patterns of the LOE surfaces **14**a, **14**b, such that TIR-guided illumination that escapes the LOE **12** through the surfaces **14**a, **14**b most often also escape out of the low index material so as not to be reintroduced back into the LOE **12.**

It is noted that the above-mentioned thickness ranges of the low index material **51** can also be expressed as a percent of the LOE thickness (measured in the y-dimension between the surfaces **14**a, **14**b). In preferred embodiments, the thickness of the LOE **12** is typically in a range of 0.6 mm to 1.5 mm (600 $\mu$m to 1500 $\mu$m). Thus, the low index material **51** thickness ranges of greater than 2 $\mu$m, preferably between 2 $\mu$m to 100 $\mu$m, more preferably between 2 $\mu$m to 20 $\mu$m, and even more preferably between 2 $\mu$m to 10 $\mu$m respectively correspond to: greater than 0.13% of the thickness of the LOE, preferably between 0.13% to 16.67% of the thickness of the LOE, more preferably between 0.13% to 3.33% of the thickness of the LOE, and even more preferably between 0.13% to 1.67% of the thickness of the LOE.

Generally speaking, the capsule **50** can be formed from various types of transparent low index materials. Such transparent materials include, but are not limited to, bulk materials (such as glass or polymers), optical adhesives, dielectric materials, polymer materials (such polymer resin), and the like. All of these materials can be directly attached (i.e., directly bonded) to the LOE **12** at the surfaces **14**a, **14**b using various known techniques which facilitate direct attachment without use of any intermediate materials or layers between the low index material **51** and the surfaces **14**a, **14**b.

In certain embodiments, one or more layers of the low index material **51** can be directly attached to the surfaces **14**a, **14**b. This may be particularly applicable in embodiments in which the low index material is implemented as a low index optical adhesive, which can also easily accommodate attachment of additional optical components or elements to the LOE.

In other embodiments, it may be preferable to provide a single thin layer of the low index material. This may be particularly applicable in embodiments in which the low index material is implemented as a low index dielectric material or a low index polymer.

In yet further embodiments, two or more low index materials can be deployed at different regions of the LOE so as to cooperate to encapsulate the LOE. Such embodiments are of particular advantage in situations in which the LOE provides aperture expansion two dimensions, as will be discussed in subsequent sections of the present disclosure.

The technique used to attach / bond the low index material **51** to the surfaces **14**a, **14**b may depend on the type of low index material used. For example, if a bulk material is used, sonication or a heat treatment bonding process can be used to directly attach the bulk material to the surfaces **14**a, **14**b. In this respect, within the context of the present disclosure, bulk material refers to any solid-state material, including, for example, glass or polymer, that can be attached directly to the surfaces **14**a, **14**b of the LOE **12** using any process (e.g., sonication, heat treatment, and the like) that induces direct bonding without any intermediate materials present between the solid-state material and the LOE **12.**

It is noted that the major surfaces **14**a, **14**b of the LOE **12**, as well as the surfaces **54**a, **54**b of the capsule **50,** are preferably polished so as to improve optical quality. The polishing can be performed using any polishing tool or apparatus known in the art.

The process by which the LOE **12** is encapsulated by the capsule **50** is referred to herein as an encapsulation process. The encapsulation process can be performed using various techniques that are known in the art, including, but not limited to, dip-coating, spin coating, bonding, and molding. Dip-coating and spin coating are both industrial coating processes that are well-known in the art of substrate fabrication and processing. Bonding techniques have been discussed above, and are particularly suitable when the low index material **51** is a solid-state (bulk material). Molding techniques, such as injection molding, may be particularly useful in embodiments in which the low index material **51** is implemented as a polymer or polymer resin. In such embodiments, the LOE **12** can be inserted into a mold that defines the shape of the capsule, and the low index material, such polymer resin, can then be provided (e.g., injected) into the mold and then left to cure until set and then the encapsulated LOE can be removed from the mold.

In certain scenarios, image illumination propagating through the LOE **12,** or illumination from an external scene, may impinge on portions of the LOE, such as one or more of the other surfaces **15**a, **15**b, **16**a, **16**b of the LOE **12**, which may cause scattering of part of the illumination. This scattered illumination may, in some cases, reach the user's eye, for example via deflection by the optical coupling-out configuration **30**. In order to mitigate and preferably altogether prevent light scattering effects, certain embodiments of the present invention provide a layer (or layers) of an opaque material, such as light-absorbing paint (e.g., black paint), at the perimeter edges **15**a, **15**b, **16**a, **16**b of the LOE **12**. As a result, when illumination impinges on the perimeter edges **15**a, **15**b, **16**a, **16**b that would otherwise scatter, the illumination is preferably absorbed by the opaque material.

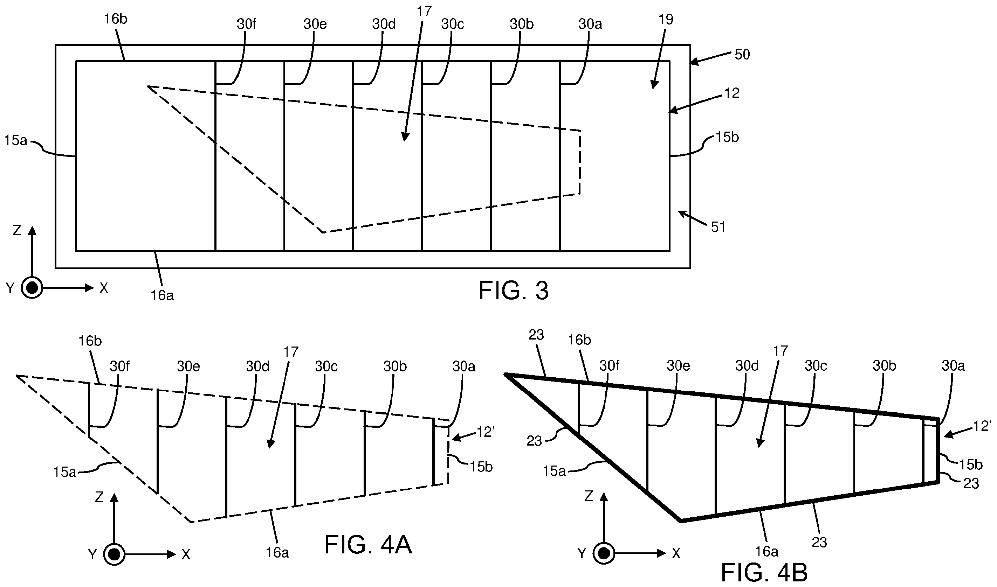

In certain embodiments, the opaque material coating process can be simplified by reducing the surface area of the perimeter edges **15**a, **15**b, **16**a, **16**b that is to be coated with the opaque material. Before discussing this simplification in detail, it is first noted that the LOE **12** can typically be sub-divided into an active area in which the image illumination propagates and is eventually directed toward the user, and an inactive area in which the image illumination does not propagate or in which the image illumination is not directed towards the user. The active area and the inactive area are referred to interchangeably as an "imaging area" and "non-imaging area" respectively. The imaging area can be defined by an envelope that is mapped out by all ray paths propagating within the LOE **12** deflected by the optical coupling-out configuration **30** toward the EMB. FIG. 3 illustrates a schematic front view of the LOE **12** similar to as shown in FIG. 2C, except here the LOE **12** is shown with an active area **17** (demarcated by dashed lines) and an inactive area **19**.

In certain embodiments, surface area of the perimeter edges **15**a, **15**b, **16**a, **16**b can be reduced by cutting or trimming the LOE **12** to remove substantially the entirety (i.e., all or most) of the inactive area **19,** thereby providing an LOE that contains effectively only an active area. Such an LOE **12'** is illustrated in FIG. 4A. In certain embodiments, the LOE **12'** is a pre-cut LOE that is cut or trimmed from LOE **12** (here, LOE **12** is referred to also as a precursor LOE). The LOE **12** is thus modified (via cutting / trimming) to remove the inactive area **19,** thereby producing modified LOE **12'** having only active area **17**. The modified LOE **12'** can then be polished at the surfaces **14**a, **14**b to improve optical quality. Alternatively, the surfaces **14**a, **14**b of the precursor LOE **12** can be polished prior to cutting / trimming to remove the inactive area **17.**

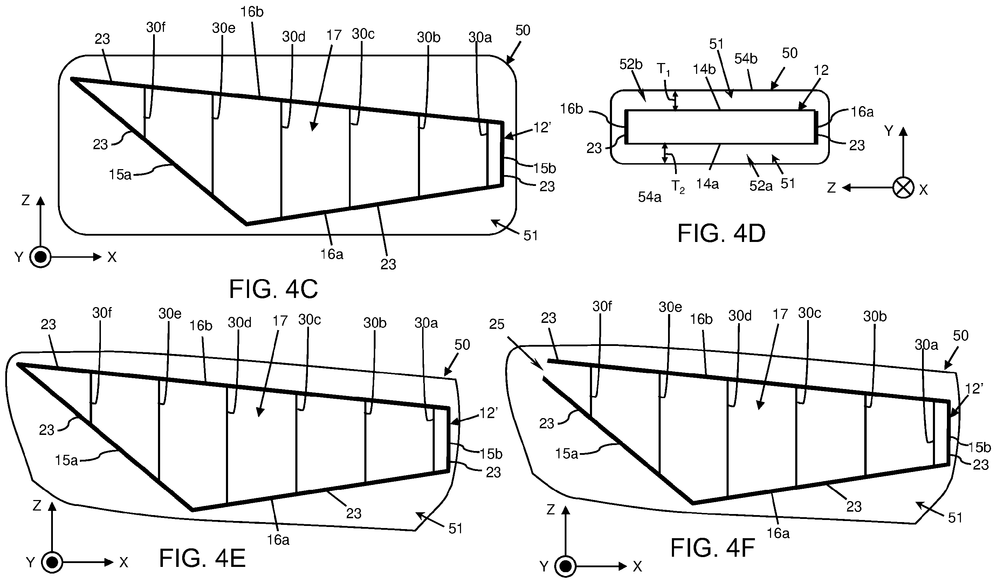

The modified / pre-cut LOE **12'** can then be coated with opaque material **23** at the reduced perimeter edges **15**a, **15**b, **16**a, **16**b, as illustrated in FIG. 4B. Once coated with the opaque material **23**, the coated LOE **12'** can then be encapsulated by the capsule **50** (using an encapsulation process, such as any of the encapsulation processes / techniques discussed above) such that the low index material **51** of the capsule **50** is directly attached / bonded to the surfaces **14**a, **14**b of the LOE. In certain embodiments, the low index material **51** is also directly attached / bonded to the opaque material **23** at the perimeter edges **15**a, **15**b, **16**a, **16**b. FIGS. 4C and 4D show different views of the coated LOE **12'** by capsule **50** in which the low index material also directly contacts the perimeter edges **15**a, **15**b, **16**a, **16**b. The surfaces **54**a, **54**b of the capsule **50** can then be polished to improve optical quality of the optical device.

As illustrated in FIG. 4E, the encapsulated LOE **12'** can optionally be cut or trimmed to achieve a desired eyepiece contour. In particular, the low index material **51** of the capsule **50** can be cut or trimmed to achieve a desired shape having an eyepiece contour. This is particularly useful when the encapsulated LOE is intended to be fit as part of a near-eye display device that is implemented, for example, in an eyeglasses form factor.

In certain embodiments, the LOE **12** or **12'** can be modified in order to accommodate placement of an optical coupling-in configuration. Modification of the LOE can be accomplished by cutting / trimming the LOE (prior to encapsulation) to define a coupling-in region of the LOE. FIG. 4F shows an example of the LOE **12'** which has been further modified to include coupling-in region **25** (through which the image illumination can be injected) after encapsulation by the capsule **50**. A similar modification can be made to the LOE **12**. Alternatively, the encapsulated LOE can be modified to provide the encapsulated LOE with a coupling-in region, for example by grinding / cutting / trimming an area / portion of the capsule **50** that is located in the region that will be the coupling-in region.

It is noted that removal of the inactive area of the LOE is not an absolute requirement, and embodiments are contemplated herein in which one or more of the peripheral edges **15**a, **15**b, **16**a, **16**b of a fully intact LOE (i.e., an LOE having both active and inactive areas) are coated with opaque material.

As previously mentioned, the optical coupling-in configuration (placed at the coupling-in region) functions to inject image illumination generated by an image projector (for example the image projector **18** of FIG. 1) into the LOE for guiding by TIR. As discussed, the optical coupling-in configuration can be appropriately designed in order to accommodate injection of image illumination at angles that include shallow angles. Design of the optical coupling-in configuration may also include appropriate design of the coupling-in region, i.e., appropriately modifying the LOE or encapsulated LOE to produce an appropriate coupling-in region that can accommodate placement of the optical coupling-in configuration.

The encapsulated LOEs according to the embodiments of the present invention provide a number of advantages over conventional unencapsulated LOEs. First, the encapsulated LOEs according to certain embodiments, for example the encapsulated LOE of FIG. 4E which includes a trimmed LOE **12'** having only an active area and a capsule **50** trimmed to fit an eyepiece contour, are lighter in weight than their conventional unencapsulated LOE counterparts. Another advantage is that the encapsulated LOEs provide direct mechanical contact of functional elements such as eyeglass frames. Besides such mechanical advantages, the encapsulated LOEs according to embodiments of the present invention provide certain optical advantages over convention unencapsulated LOEs. Some notable optical advantages are the ability to attach additional optical elements, such as lenses, protective films, ghost image reducing coatings / films and the like, directly to the capsule **50** an in association with one of the major surfaces **14**a, **14**b without adversely affecting conditions of TIR.

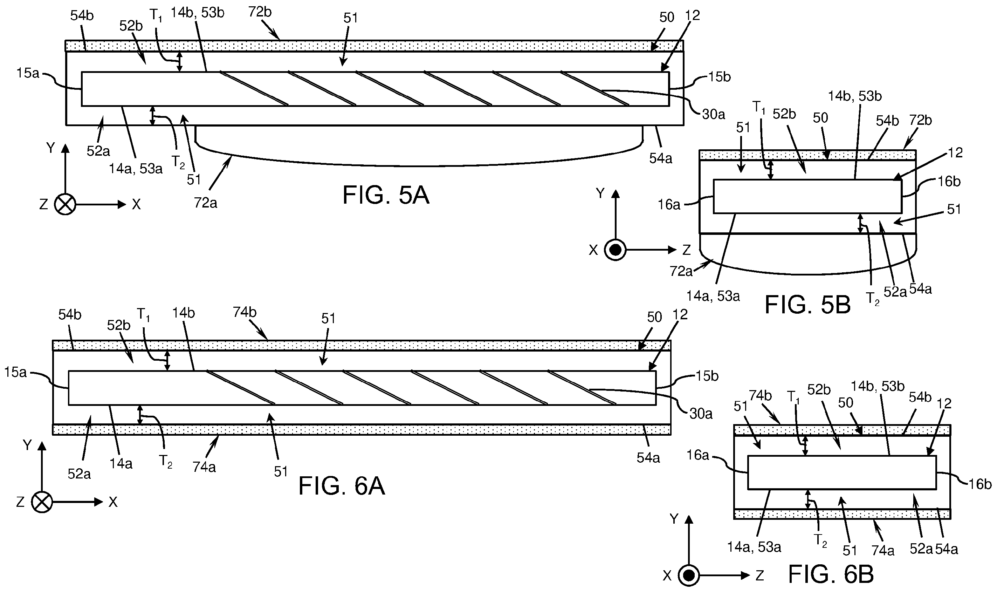

Turning now to FIGS. 5A - 8B, there are illustrated examples of encapsulated LOEs having various additional optical elements attached thereto. In all of the examples, a first optical element (**72**a/**74**a/**76**a/**78**a) is directly attached to the capsule **50** at the surface **54**a so as to be deployed in association with the major surface **14**a (i.e., in facing relation to the user's eye), and a second optical element (**72**b/**74**b/**76**b/**78**b) is directly attached to the capsule **50** at the surface **54**b so as to be deployed in association with the major surface **14**b (i.e., facing away from the user's eye, i.e., on the back side of the LOE). The direct attachment of the optical elements **72**a/**74**a/**76**a/**78**a, **72**b/**74**b/**76**b/**78**b to the surfaces **54**a, **54**b can be provided, for example, via adhesive bonding. In embodiments in which the capsule **50** is formed from a low index optical adhesive, the low index optical adhesive (having thickness $T_1$ and $T_2$) can also be used to bond the optical elements **72**a/**74**a/**76**a/**78**a, **72**b/**74**b/**76**b/**78**b to the LOE at the surfaces **14**a, **14**b.

The first optical element **72**a/**74**a/**76**a/**78**a can be designed and deployed so as to extend across part, most, or all of the surface **54**a in the lateral direction (x-dimension in the drawings) and the transverse direction (z-dimension in the drawings). Similarly, the second optical element **72**b/**74**b/**76**b/**78**b can be designed and deployed so as to extend across part, most, or all of the surface **54**b in the lateral direction and the transverse direction.

Turning now to FIGS. 5A and 5B, there is shown a first example of optical elements in which the first optical element **72**a is in the form of a lens (which may be a prescription lens, i.e., an ophthalmic lens), and the second optical element **72**b is in the form of a protective film (i.e., a safety protective film, such as thin optical protective films).

The lens **72**a can be designed to apply positive or negative optical power, and depending on the design and deployment location of the lens, can apply such optical power to illumination from an external scene that is viewable by the user through the surfaces **14**a, **14**b and may also apply such optical power to the image illumination coupled-out from the LOE **12** e.g., rays **32A**, **32B** in FIG. 1). In the illustrated example, the lens **72**a is a plano-convex and thus applies positive power. In addition, the lens **72**a is shown as partially extending across the surface **54**a in the lateral direction and fully extending across the portion of the LOE **12** that contains the partially reflecting surfaces **30**. Thus, in the illustrated example the lens **72**a applies positive optical power to light from the external scene as well as image illumination that is coupled-out of the LOE **12** by the partially reflecting surfaces **30**.

The protective film **72**b is shown as fully extending across the surface **54**b in both lateral and transverse directions. The film **72**b can be a protective safety film that protects the LOE **12** from damage, for example chipping, shattering, breaking. The film **72**b may also be a barrier film (available, for example from 3M) that provides an anti-scratch or scratch-resistant coating, and/or protection against dirt or other particulates or contamination from coming into contact with the LOE.

With reference to FIGS. 6A and 6B, there is shown a second example of optical elements in which both the first optical element **74**a and the second optical element **74**b are implemented as a protective film (similar to the optical element **72**b in FIGS. 5A and 5B). In this example, the films **74**a, **74**b extend across the entirety of the surfaces **54**a, **54**b in both lateral and transverse directions.

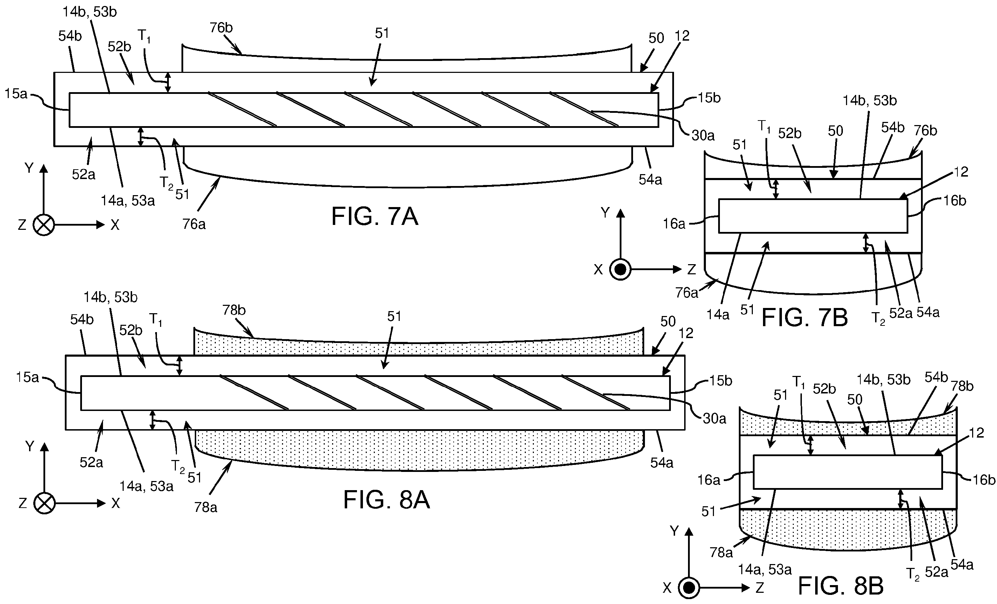

FIGS. 7A and 7B illustrate a third example of optical elements. In this example, the first optical element **76**a is implemented as a first lens, and the second optical element **76**b is implemented as a second lens, each of which can apply optical power. Here, the first lens **76**a is a plano-convex (positive) lens (similar to the lens **72**a in FIGS. 5A and 5B) and the second lens **76**b is a plano-concave (negative) lens, thus the two lenses **76**a, **76**b in combination provide double optical power. In the illustrated example, the first lens **76**a extends partially across the surface **54**a in the lateral direction and fully extends across the surface **54**a in the transverse direction. Similarly, the second lens **76**b extends partially across the surface **54**b in the lateral direction and fully extends across the surface **54**b in the transverse direction.

Turning now to FIGS. 8A and 8B, there is illustrated a fourth example of optical elements. In this example, the first optical element **78**a and the second optical element **78**b are both optical power and protective lenses, meaning that both lenses provide optical power and protection functionality. Specifically, the lens **78**a, which can be a positive or negative lens but in the illustrated example is shown as a plano-convex (positive) lens (similar to lenses **72**a, **76**a), has a protective film or coating (having properties akin to the films **72**b, **74**a, **74**b) applied thereto. Similarly, the lens **78**b, which can be a positive or negative lens but in the illustrated example is shown as a plano-concave (negative) lens (similar to lens **76**b), has a protective film or coating (having properties akin to the films **72**b, **74**a, **74**b) applied thereto. In the illustrated example, the lenses **78**a, **78**b fully extend across the respective surfaces **54**a, **54**b in the transverse direction, but only partially extend across the respective surfaces **54**a, **54**b in the lateral direction.

It is emphasized that the configurations illustrated in FIGS. 5A - 8B are merely an exemplary subset of possible configurations envisioned according to embodiments of the present invention, and other configurations, including configurations having combinations of multiple optical elements deployed in association with both of the major surfaces **14**a, **14**b and configurations having only one of the major surfaces **14**a, **14**b having one or more optical elements deployed in association therewith, fall within the scope of the present invention. For example, embodiments are contemplated in which a protective film is applied at the surface **54**a (similar to as in FIGS. 6A and 6B) and a lens (for example a negative lens) is applied at the surface **54**b.

Although the embodiments described thus far have pertained to LOEs having an optical coupling-out configuration **30** implemented as a set of mutually parallel partially reflecting internal surfaces at least partially traversing the LOE and oblique to the surfaces **14**a, **14**b (i.e., facets deployed within the LOE), the set partially reflecting surfaces is merely illustrative of one non-limiting implementation of an optical coupling-out configuration, and other optical coupling configurations can be used to couple image illumination out of the LOE **12**. The optical coupling-out configuration may be any optical coupling arrangement which deflects part of the incident image illumination already propagating within the LOE **12** by TIR to an angle such that the deflected part of the image illumination exits the LOE **12**. Other examples of such suitable optical coupling arrangements include, but are not limited to, one or more diffractive optical elements (e.g., diffractive gratings) deployed on either of the surfaces **14**a, **14**b (most suitably used when the optical coupling-in configuration is implemented as one or more diffractive elements), and a beamsplitter arrangement.

The embodiments described thus far have pertained to encapsulation of LOEs that are configured to perform aperture expansion in one dimension (approximately in the x-dimension in the arbitrarily labeled coordinate system used in the drawings). However, encapsulation of LOEs that perform two-dimensional aperture expansion using the encapsulation methodologies / techniques described above also falls within the scope of the present invention. In fact, the encapsulation methodologies described herein may in certain cases be more applicable to LOE architectures that perform two-dimensional aperture expansion. Various solutions for LOE-based optical devices that perform two-dimensional aperture expansion have been developed over the years, including two exemplary classes of solutions developed by Lumus Ltd (Israel), each of which is based on two sets of partially reflective surfaces (i.e., two sets of optical coupling configurations) within two respective regions of an LOE (implemented as one or more light-transmitting substrates) that each deflect a proportion of propagating image illumination.

In one of the exemplary classes of solutions developed by Lumus, and described in various publications, including, for example, PCT publication no. WO 2020/049542, two-dimensional aperture expansion is achieved using what is referred to as "compound LOEs". In general terms, these compound LOEs employ two regions, each of which is a parallel-faced slab of transparent (i.e., light-transmitting) material for facilitating the propagation of collimated image illumination by TIR at parallel major external surfaces, and each of which includes an optical coupling configuration (for example a set of mutually parallel partially reflecting internal surfaces (i.e., facets deployed within the LOE) or diffractive elements), which redirect the image illumination while achieving expansion of the optical aperture.

In another of the exemplary classes of solutions, also developed by Lumus, and described in various publications, including, for example, US Patent No. 10,133,070, two-dimensional aperture expansion is achieved utilizing a first rectangular LOE optically coupled with a second slab-type LOE, each of which supports propagation of image illumination by internal reflection. In general terms, these rectangular LOE based solutions also employ two regions, the first of which includes the rectangular LOE which is formed as an elongated substrate having two pairs of planar parallel major external surfaces that form a rectangular cross-section. The rectangular LOE supports propagation of image illumination by total internal reflection at the two pairs of major external surfaces (referred to as four-fold total internal reflection). The second region includes the slab-type LOE, which is optically coupled with the rectangular LOE, and which has a form similar to the LOE of FIG. 1. In other words, the second slab-type LOE has a pair of major parallel surfaces and a set of internal partially reflective surfaces (facets) inclined oblique to the major parallel surfaces. The rectangular LOE also has a set of parallel facets angled obliquely to the direction of elongation of the rectangular LOE, which deflects a proportion of the image illumination that propagates through the rectangular LOE into the second LOE so as to be guided through the second LOE by TIR at the pair of parallel major surfaces of the second LOE. A proportion of the image illumination that propagates through the second LOE is deflected by the facets of the second LOE so as to be coupled out of the second LOE toward the eye of the observer.

Accordingly, the optical coupling-out configuration **30** described within the context of one-dimensional aperture expansion can more generally be referred to as an optical coupling configuration **30** that deflects a proportion of the image illumination that is guided within the LOE, and LOE architectures that performs two-dimensional aperture expansion can include two (or more) such optical coupling configurations each for deflecting image illumination propagating through LOE regions by TIR. In embodiments in which the LOE is configured to perform aperture expansion in one dimension only, the optical coupling configuration **30** deflects the proportion of guided image illumination out of the LOE towards the user.

Bearing the above in mind, the following paragraphs describe embodiments of at least partially encapsulated two-dimensional aperture expanding LOEs. First, embodiments of an at least partially encapsulated compound LOE will be described, and then embodiments of an at least partially encapsulated rectangular LOE based arrangement will be described.

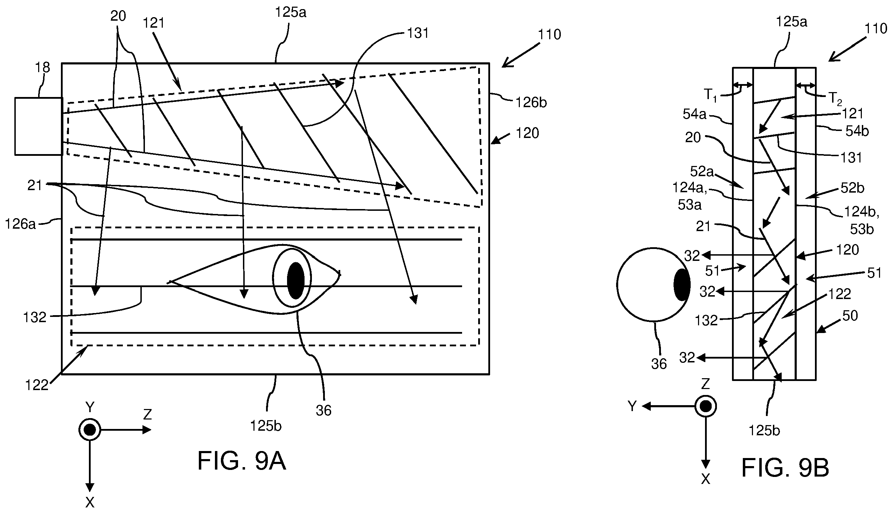

Referring now to FIGS. 9A and 9B, there is shown different views of an example of an optical device **110** having an encapsulated compound LOE **120** having two optical coupling configurations **131, 132** located in two respective regions of the LOE, each of which deflects propagating image illumination. The LOE **120** is formed as a slab of transparent (i.e., light-transmitting) material having a pair of parallel major external surfaces (faces) **124**a, **124**b, and has a first region **121** (also referred to herein as "LOE1" which is demarcated by dashed lines in FIG. 9A) containing the first optical coupling configuration **131** and a second region (also referred to herein as "LOE2" which is demarcated by dashed lines in FIG. 9A) containing the second optical coupling configuration **132**. In the non-limiting example embodiment illustrated in the drawings, the first optical coupling configuration **131** is implemented as a first set of planar mutually-parallel partially-reflecting internal surfaces (facets) having a first orientation, and the second optical coupling configuration **132** is implemented as a second set of planar mutually-parallel partially-reflecting internal surfaces (facets) having a second orientation non-parallel to the first orientation. It should be noted, however, that the optical coupling configurations **131, 132** can also be implemented as diffractive optical elements (e.g., diffractive gratings) deployed on either of the surfaces **124**a, **124**b.

Parenthetically, in certain embodiments the general steps for producing optical devices having an encapsulated compound LOE are similar to those used for producing optical devices having encapsulated LOEs that perform one-dimensional aperture expansion. In such embodiments, these steps generally include obtaining the LOE, and then at least partially encapsulating the obtained LOE by directly attaching the low index material to the major external surfaces of the LOE. As in the one-dimensional embodiments, the low index material may extend across the entirety of the length of the major external surfaces (full encapsulation) or may extend across the vast majority of the length of the major external surfaces (partial encapsulation). Obtaining the LOE may, in certain embodiments, include fabricating the LOE. Methods for fabricating compound LOEs have been described extensively in various publications by Lumus Ltd. (Israel), including, for example, in the aforementioned PCT publication no. WO 2020/049542. In other embodiments, the encapsulation step may be performed as an additional step of the compound LOE fabrication process.

In embodiments in which the optical coupling configurations **131, 132** are implemented as sets of facets (as shown in the drawings), the first orientation generally refers to the facets **131** being inclined obliquely to the direction of propagation image illumination, and the second orientation refers to the facets **132** being non-parallel to the facets **131** and also being inclined obliquely to the surfaces **124**a, **124**b. In one set of non-limiting examples, the first orientation can also be such that the facets **131** are orthogonal to the major surfaces **124**a, **124**b, while in another set of non-limiting examples the first orientation can also be such that the facets **131** are obliquely angled relative to the major surfaces **124**a, **124**b.

The mutually-parallel major external surfaces **124**a, **124**b extend across the first and second regions **121** and **122** such that both the first set of partially-reflecting surfaces **131** and the second set of partially-reflecting surfaces **131** are located between the major external surfaces **124**a, **124**b.

Image illumination, represented here schematically by sample rays **20,** corresponding to a collimated image generated by image projector **18,** propagates within the first region **121** of the LOE **120** by TIR at the surfaces **124**a, **124**b. The first optical coupling configuration **131** deflects part of the image illumination from a first direction of propagation trapped / guided by TIR within the first region **121** of the LOE **120** to a second direction of propagation, also trapped / guided by TIR within the LOE **120.** The deflected image illumination (represented here schematically by sample rays **21**) then passes from the first region **121** into the second region **122,** in which the second optical coupling configuration **132** deflects part of the TIR-guided image illumination so as to progressively couple a proportion of the image illumination (represented schematically in FIG. 9B as sample rays **32**) out of the LOE **120** and towards the eye **36** of the observer / user located within the EMB, thereby achieving a second dimension of optical aperture expansion.

It is noted that in drawings corresponding to the compound LOE embodiments, only the in-plane propagation directions of the rays are illustrated during propagation within the LOE, but the rays actually follow a zigzag path of repeated internal reflection from the two major external surfaces **124**a, **124**b (similar to as shown in FIG. 1), and one entire dimension of the image field of view is encoded by the angle of inclination of the rays relative to the major external surfaces, corresponding to the pixel position in the Y dimension.

The LOE **120** also includes additional external (perimeter) surfaces (edges) **125**a, **125**b, **126**a, **126**b which may or may not be pairs of parallel surfaces. It is noted that in the illustrated example, the low index material **51** of the capsule **50** is only in direct contact with parallel major surfaces **124**a, **124**b of the LOE **120** but is not in contact with the perimeter surfaces (edges) **125**a, **125**b, **126**a, **126**b of the LOE **120**. However, it should be apparent that other configurations are possible in which the low index material is in direct contact with one or more of the perimeter surfaces (edges) **125**a, **125**b, **126**a, **126**b.

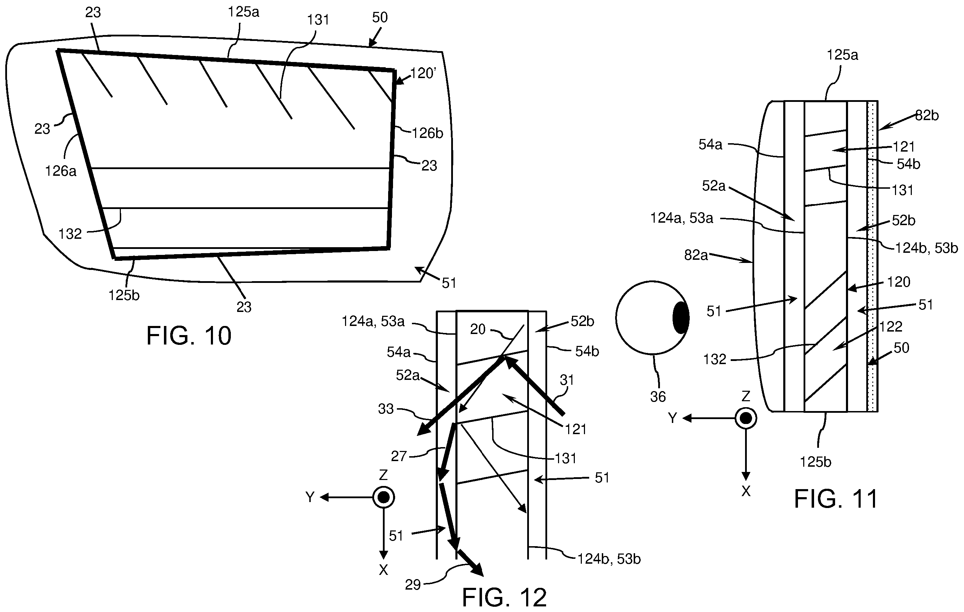

In certain embodiments, the edges **125**a, **125**b, **126**a, **126**b can be coated with an opaque material to reduce scattering, similar to as described above in the context of the one-dimensional aperture expanding LOE **12**. In addition, similar to the LOE **12,** the compound LOE **120** has an active area and an inactive area. Thus, similar to as previously described in the context of the LOE **12,** a compound LOE having only an active area can be obtained (for example by trimming / cutting the compound LOE **120** to remove the inactive area), and the perimeter edges of the trimmed compound LOE can be coated with the opaque material. FIG. 10 illustrates an example of a compound LOE **120'** that has been trimmed to remove most or all of the inactive area, and in which the resulting perimeter edges **125**a, **125**b, **126**a, **126**b have been coated with opaque material **23**. In this example, the low index material **51** of the capsule **50** is also shown as being in direct contact with the coated perimeter edges **125**a, **125**b, **126**a, **126**b.

Similar to the LOE described with reference to FIGS. 5A - 8B, the LOE **120** can have additional optical elements attached thereto via direct attachment to the capsule **50** at the external surfaces **54**a, **54**b of the low index material **51,** including combinations of lenses and protective films. FIG. 11 illustrates one non-limiting example configuration in which a first optical element **82**a (represented here as a lens, e.g., an ophthalmic lens) is attached at the front surface **54**a of the capsule **50,** and a second optical element **82** (represented here as a protective film) is attached at the back surface **54**b of the capsule **50.** Although only one example configuration, in which the optical elements **82**a and **82**b are implemented as a lens and a protective film, respectively, is illustrated in the drawings, it should be clear that any of the combinations of lenses and/or protective films discussed above in the context of LOEs that perform one-dimensional aperture expansion are also applicable here in the context of LOE **120** that performs two-dimensional aperture expansion.

It is noted that although FIG. 11 shows the lens **82**a as extending along the entirety of the surface **54**a in the lateral dimension (x-dimension in the figure) so as to extend along the entirety of the major surface **124**a in the lateral dimension such that the lens **82**a is associated with portions of the major surface **124**a in each of the regions **121, 122** of the LOE **120,** in certain cases, the dimensions of the lens **82**a may be limited such that the lens **82**a extends only across a portion of the surface **54**a in the lateral dimension such that the lens **82**a is only associated with portions of the major surface **124**a that are in the second region **122** of the LOE **120**. This may, in certain cases, be more practical since it is in the second region **122** of the LOE **120** from which image illumination is deflected out by the facets **132,** and also through which the eye **36** can view the external scene (via the major surfaces **124**a, **124**b).

As mentioned in previous sections of the present disclosure, the thicknesses ($T_1$ and $T_2$) of the two regions **52**a, **52**b (which respectively correspond to the layer(s) of the low index material **51** of the capsule **50** extending across the length of the surfaces **124**a and **124**b) are exaggerated for clarity in the drawings in order to better explain the principles of the present invention, but it may be particularly advantageous to keep the thicknesses of the two regions **52**a, **52**b relatively small to increase optical performance while at the same time reducing the overall bulk of the optical device. Specifically, the thickness of the low index material **51** at the surfaces **124**a, **124** is preferably sufficiently small such that surface patterns of the low index material **51** follow blemish patterns at the surfaces **124**a, **124**b such that TIR-guided illumination that escapes the LOE **120** through the surfaces **124**a, **124**b most often also escape out of the low index material **51** so as not to be reintroduced back into the LOE **120**. However, situations may arise in which image illumination that deviates from the main image escapes from the LOE **120** and into one or both of the regions **52**a, **52**b and is reflected at the surface **54**a or **54**b by TIR (due to the escaped illumination impinging on the surface **54**a or **54**b at an angle of incidence greater than a critical angle defined by the refractive index of the low index material **51** and the medium surrounding the capsule **50,** which is typically air) back into the LOE **120** as scattered light. In addition, situations may arise in which light from a scene (e.g., external scene) can enter the LOE and be reflected by one of the optical coupling configurations towards the user's eye. These situations are schematically illustrated in FIG. 12, which shows an enlarged partial side view of the first region **121** of the LOE **120**. As illustrated in FIG. 12, illumination (represented schematically as thick sample ray **27**) that deviates from the main TIR-guided image

20 and escapes from the LOE **120** (via the surface **124**a) into region **52**a of the capsule **50** is reflected by TIR at the surface **54**a and then re-enters the LOE **120** (via the surface **124**a) as scattered light (represented schematically as thick sample ray **29**). Also shown is light (represented schematically as thick sample ray **31**) from an external scene that enters the LOE **120** (via the surface **124**b) and is deflected / reflected by the optical coupling configuration **131** as reflected light (represented schematically as thick sample ray **33**) toward the user's eye **36**.

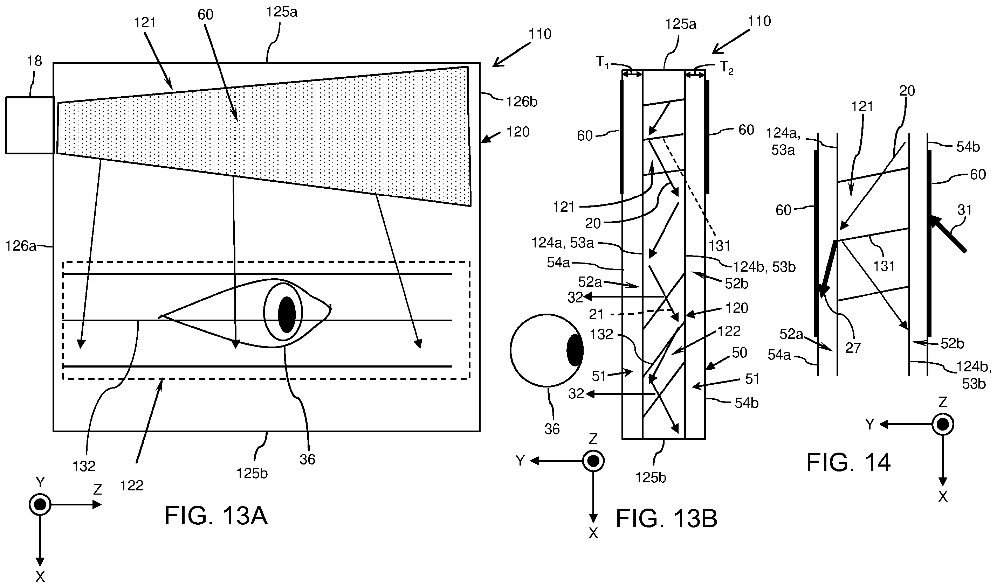

In order to mitigate scattering and unwanted reflections in the above-mentioned scenarios, embodiments falling under the scope of the claims provide one or more layers of a light-absorbing material at one or more portions of the low index material **51**. With reference now to FIGS. 13A and 13B, there are shown different views of the optical device **110** having light-absorbing material **60** deployed in association with portions of the low index material 51 via direct attachment to the portions of the low index material **51**. In the illustrated example, the light-absorbing material **60,** which can be implemented for example as one or more layers of black paint, is directly deposited or coated on a minority portion (surface area) of each of the surfaces **54**a, **54**b of the low index material **51** that is directly attached to the surfaces **124**a, **124**b in the first region **121** of the LOE **120**. The minority portion of the surfaces **54**a, **54**b of the low index material **51** that is covered by the light-absorbing material **60** constitutes roughly the entire surface area of the low index material **51** that covers the area spanned by the projection of the first optical coupling configuration **131** in the xz plane, and preferably includes the surface area of the low index material **51** that extends slightly beyond this spanned area. This helps to ensure that illumination from the external scene arriving at the optical device at angles that would otherwise support entry to the LOE and deflection from the optical coupling configuration **131** are absorbed by the light-absorbing material **61**. Roughly speaking, the area of the low index material **51** that is covered by the light-absorbing material **60** includes roughly the entire surface area of the low index material **51** that covers the first region **121** of the LOE **120** and may also include some of an intermediate region of the LOE **120** between the regions **121, 122** (or some of the second region **122**) so as to extend slightly beyond the projection of the first optical coupling configuration **131** in the xz plane. By proportion, the minority portion of the surfaces **54**a, **54**b of the low index material **51** that is covered by the light-absorbing material **60** makes up approximately 10 - 20% of the surface area of the low index material deployed at each of the surfaces **124**a, **124**b.

FIG. 14 schematically illustrates the effect of the light-absorbing material on escaped illumination (ray **27**) and scene illumination (ray **31**). As shown, illumination **27** that deviates from the main TIR-guided image **20** and escapes the LOE **120** (via the surface **124**a) into region **52**a of the capsule **50** is absorbed by the light-absorbing material **60** deployed at the surface **54**a, thereby preventing the occurrence of TIR at the surface **54**a and preventing re-entry of scattered light into the LOE **120**. Also as shown, illumination **31** from an external scene is absorbed by the light-absorbing material **60** deployed at the surface **54**b, thereby preventing deflection / reflection of the illumination **31** by the optical coupling configuration **131** toward the user's eye.

In order to prevent Fresnel reflections or TIR reflections, the light-absorbing material **60** preferably has a refractive index that is the same as (i.e., equal to) or slightly higher than the refractive index of the low index material **51** that forms the capsule **50**. By slightly higher, it is meant that the refractive index of the light-absorbing material **60** is preferably no more than 10% larger / greater (and more preferably no more than 5% larger / greater) than the refractive index of the low index material **51** from which the capsule **50** is formed.

Since the eye **36** is located in the EMB which located in front of the second region **121** of the LOE **120,** the layer(s) of light-absorbing material **60** does/do not interfere with the user's visibility of the image illumination coupled-out by the second optical coupling configuration **131** or the user's visibility of the external scene, which is viewable through the surfaces **124**a, **124**b.

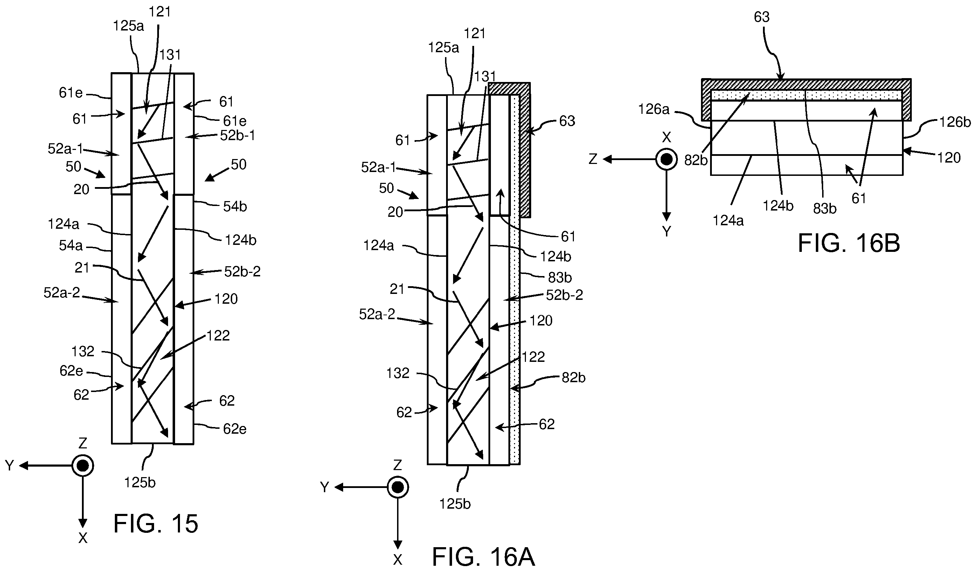

As mentioned above, in certain embodiments the capsule **50** can be formed from more than one low index material. FIG. 15 illustrates a non-limiting example of such an embodiment in which a first low index material **61** is directly attached to the portions of the surfaces **124**a, **124**b that are in the first region **121,** and a second low index material **62** is directly attached to the portions of the surfaces **124**a, **124**b that are in the second region **122**. The second low index material **62** is a transparent material, and the first low index material may or may not be a transparent material. Here, the first region **52**a of the capsule **50** is sub-divided into two sub-regions **52**a-1 and **52**a-2, and the second region **52**b of the capsule **50** is sub-divided into two sub-regions **52**b-1 and **52**b-2. The first low index material **61** is in the sub-regions **52**a-1 and **52**b-1, whereas as the second low index material **62** is in the sub-regions **52**a-2 and **52**b-2. The two low index materials **61, 62** are adjacently placed to form the capsule, and thus cooperate to at least partially encapsulate the LOE. In other words, a part of the capsule **50** is formed from the first low index material **61,** and another part of the capsule **50** is formed from the second low index material **62**. Preferably, at each of the major external surfaces **124**a, **124**b of the LOE **120,** the external surface **62**e of the second low index material **62** that is attached to the major external surface of the LOE **120** is a continuation of the external surface **61**e of the first low index material **61** that is attached to the major external surface of the LOE **120,** thereby forming the external surfaces **54**a, **54**b of the capsule **50**.

Preferably, the two low index materials **61, 62** have the same or similar refractive index. However, this is not an absolute requirement, and the LOE **120** can still provide two-dimensional aperture expansion despite variations in the refractive indices between the two materials **61, 62.** For example, the first low index material **61** can have a refractive index of approximately 1.2, and the second low index material **62** can have a refractive index of 1.3.

In certain embodiments, the first low index material **61** is a transparent material. In embodiments not encompassed by the wording of the claims, the first low index material **61** is a light-absorbing material having a low refractive index, implemented, for example, as black paint with inherently low refractive index (e.g., refractive index of approximately 1.3). In such other embodiments, the first low index material **61** performs multiple functions, including, for example, i) preserving conditions of TIR at the portions of the major external surfaces **124**a, **124**b that are in the first region **121,** ii) preventing illumination from the external scene, that would otherwise enter the LOE **120** via the portions of the major external surfaces **124**a, **124**b that are in the first region **121** and deflect from the first optical coupling configuration **131,** from entering the LOE **120** by absorbing the external scene illumination, and iii) preventing TIR-guided illumination that escapes the LOE **120** through the portions of the major external surfaces **124**a, **124**b that are in the first region **121** from re-entering the LOE **120** by absorbing the scaped illumination.

It is noted that in embodiments in which the first low index material **61** is a low index light-absorbing material, the first low index material **61** preferably covers the same or similar surface area of the major external surfaces **124**a, **124**b with which the light-absorbing material **60** of FIGS. 13B and 14 is associated. In other words, the first low index material **61** preferably covers the surface area of the major external surfaces **124**a, **124**b that is spanned by, and preferably extends slightly beyond, the projection of the first optical coupling configuration **131** in the xz plane.

In addition, since the low index material **61** is itself a light-absorbing material in such other embodiments, no additional layer of light-absorbing material (for example as illustrated in FIGS. 13B and 14) may be necessary.

In certain cases, in particular embodiments in which an additional optical element (e.g., a protective film) is attached to the LOE via the low index material (or low index materials), it may be advantageous to apply an additional coating layer or layers to all or part of the exposed surfaces of the optical element to increase mechanical stability and to help block unwanted light from the external scene entering the LOE. One exemplary material that can be used for the additional coating layer(s) is anti-reflective (AR) coating, which provides rigidity (mechanical stability) and anti-reflection properties. Another exemplary material that can be used for the additional coating layer(s) is a light-absorbing material, e.g., black paint. FIGS. 16A and 16B illustrate various views of an LOE according to one non-limiting example embodiment in which a coating **63** (e.g., one or more layers of AR coating, one or more layers of black paint) is applied to portions of a protective film **82**b (e.g., a thin optical protective film) that is attached to the low index material (or materials) that is attached to one of the major external surfaces **124**b. For clarity of illustration, the optical coupling configurations **131, 131** are not shown in FIG. 16B. Preferably, the coating **63** covers some or all of the major surface of the film **82**b (preferably at least the portion of the major surface **83**b of the film **82**b associated with the first region **121** of the LOE **120,** for example the portion of the film **82**b that is attached to the first low index material **61**) as well as the edges of the film **82**b and the edges of the low index material (up to the intersection with the major surface **124**b of the LOE **120**). This ensures that the low index material itself is protected from the environment, thereby preventing the low index material from chipping or peeling away from the LOE. In the illustrated example, the capsule **50** is formed from two low index materials **61, 62,** and the coating **63** covers the portion of the major surface **83**b of the film **82**b associated with the first low index material **61.** However, it should be apparent that in certain non-limiting configurations the coating **63** can also be deployed to cover the portion of the major surface **83**b of the film **82**b associated with the second low index material **62.**

In addition, it should be apparent that the deployment of the coating **63** is also suitable in situations in which a single low index material is used to form the capsule. In such configurations, the coating **63** may be deployed to cover only in the portion of the major surface of the film **82**b associated with the portion of the low index material associated with the first region **b,** or may be deployed to cover the entire major surface of the film **82**b. It is also noted that although FIGS. 16A and 16B show the coating **63** as having been deployed on the protective film **82**b that is associated with the major external surface **124**b that is opposite from the user's eye, the coating **63** can also be deployed on a protective film (that is similar to protective film **82**b) that is associated with the major external surface **124**a that is in facing relation to the user's eye (i.e., a protective film that is attached to the low index material that is attached to the major external surface **124**a, similar, for example, as the film **74**a illustrated in FIG. 6A). Such deployment of coating **63** on a protective film that is associated with the major external surface **124**b can be in addition to, or instead of, the deployment of the coating **63** on the film **82**b that is associated with the major external surface **124**b, as illustrated in FIGS. 16A and 16B.

Although the at least partially encapsulated compound LOE described herein has pertained to a particular non-limiting configuration of optical coupling configurations, other variant embodiments, employing, for example, differing imaging injection locations and geometries, nonuniform facet spacing, or introducing additional (e.g., third) sets of partially-reflecting internal surfaces, are discussed in detail in prior publications by Lumus Ltd. (Israel), particularly in the aforementioned PCT publication no. WO 2020/049542, as well as PCT publication no. WO 2020/152688 and PCT application number PCT/IL2020/051354. These additional features may all be implemented in the context of the present invention, but for conciseness, they are not addressed here in detail.

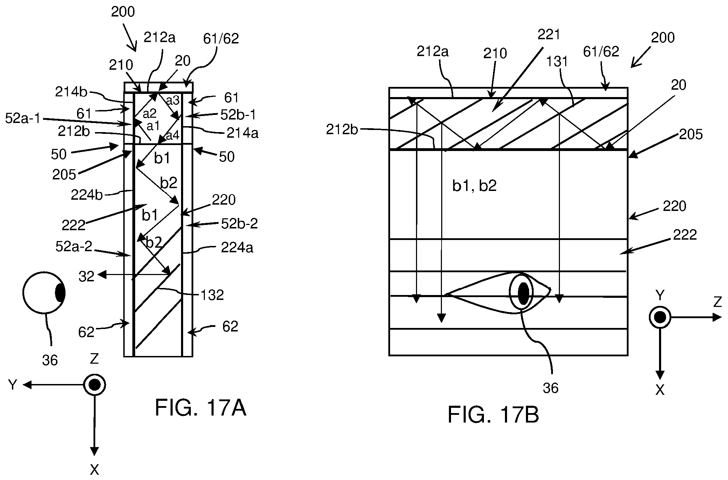

Turning now to FIGS. 17A and 17B, there is illustrated different views of an example of an optical device **200** having an at least partially encapsulated LOE **205** that performs two-dimensional aperture expansion according to another embodiment of the present invention. Here, the LOE **205** is a rectangular substrate-based architecture, and includes in a first region (or LOE section) **221** a first (rectangular) LOE **210** formed as a light-transmitting substrate having a direction of elongation (arbitrarily shown as being along the z-axis) and two pairs of major parallel external surfaces (faces) **212**a, **212**b, **214**a, **214**b that form a rectangular cross-section. A first optical coupling configuration **131,** represented here as a plurality of mutually parallel partially reflective internal surfaces (facets) **131** that at least partially traverse the LOE **210** and are inclined obliquely to the direction of elongation of the LOE **210** (i.e., the facets **131** are oblique to the surfaces **212**a, **212**b), functions to deflect image illumination propagating through the LOE **210.**

The rectangular LOE **210** is optically coupled with a second slab-type LOE **220,** in a second region (or LOE section) **222** of the LOE **205,** that is similar in structure to the LOE **12** described with reference to FIGS. 1 - 2C. Specifically, the LOE **220** is formed as a light-transmitting substrate having a pair of parallel major external surfaces **224**a, **224**b that guides image illumination through the LOE **220** by TIR at the surfaces **224**a, **224**b, and has a second optical coupling configuration **132,** represented here as a plurality of mutually parallel partially reflective internal surfaces **132** that at least partially traverse the LOE **220** and are inclined obliquely to the faces **224**a, **224**b. Preferably, the pairs of surfaces **224**a, **214**a and **224**b, **214**b are each parallel and coplanar such that the surfaces **224**a, **214**a form an apparent single surface that is parallel to an apparent single surface formed by the surfaces **224**b, **214**b.

The optical coupling between the LOEs **210, 220,** and the deployment and configuration of the partially reflective surfaces **131, 132** are such that, when image illumination **20** corresponding to a collimated image is coupled (injected) into the rectangular LOE **210** with an initial direction of propagation at a coupling angle oblique to both pairs of parallel faces **212**a, **212**b, **214**a, **214**b, the image advances by four-fold total internal reflection (images **a**1, **a**2, **a**3, **a**4) along the rectangular LOE **210**, with a proportion of intensity of the image reflected at the partially reflective surfaces **131** so as to be coupled into the slab-type LOE **220,** and then propagates through two-fold total internal reflection (images **b**1, **b**1) within the LOE **220,** with a proportion of intensity of the image reflected (deflected) at the partially reflective surfaces **132** so as to be directed outwards from one of the parallel faces **224**b as a visible image **32** seen by the eye **36** of the observer.

It should be understood that the concepts related to at least partial encapsulation of the compound LOEs **120 / 120',** including at least partial encapsulation using a capsule formed from low index material (that can include one or more transparent low index materials, or a transparent low index material that is adjacent to a light-absorbing low index material), attachment of additional optical elements to the low index material(s), deployment of additional coating layers, contour shaping to fit the shape of an eyeglass lens, and other such concepts, all as described above in the context of compound LOEs **120 / 120',** are also applicable here in the context of rectangular-based LOE **205** unless explicitly stated otherwise. Thus, the details of the encapsulation of LOE **205** and the concepts related thereto will not be repeated here, and will only be discussed in general.

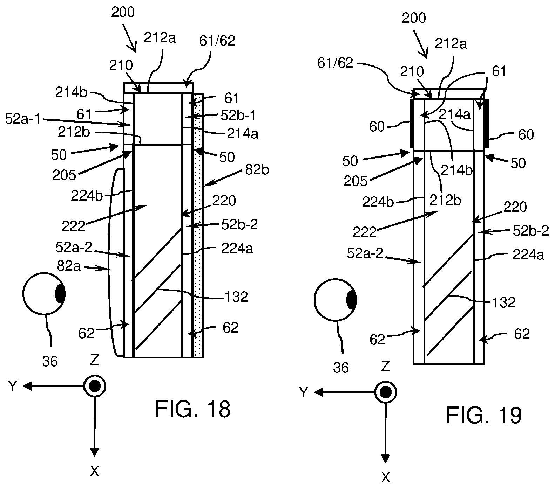

Bearing the above in mind, in general, the capsule **50** which encapsulates the LOE **205** can be formed from a single low index material (that is in direct contact with the surfaces **214**a, **214**b, **224**a, **224**b) or can be formed from a first low index material that is in direct contact with the surfaces **214**a, **214**b and a second low index material that is in direct contact with the surfaces **224**a, **224**b). In the drawings, the capsule **50** is shown as being formed from two low index materials **61, 62,** where the first low index material **61** is in direct contact with the surfaces **214**a, **214**b and the second low index material is in direct contact with the surfaces **224**a, **224**b. In certain embodiments, such as the embodiment illustrated in FIG. 18, additional optical elements **82**a, **82**b (represented here as a lens and a protective film, respectively) can be deployed in association with the front and back faces of the LOE **205** via direct attachment to relevant portions of the low index material(s) of the capsule **50.** In the illustrated example, the lens **82**a only extends partially along the LOE **205** in the x-dimension such that the lens **82**a covers the region **222,** however similar to as discussed above, the lens **82**a may extend fully across the surfaces **214**b, **224**b in the x-dimension. As should be apparent, any of the combinations of lenses and/or protective films discussed above in the context of LOEs that perform one-dimensional aperture expansion are also applicable here in the context of LOE **205** that performs two-dimensional aperture expansion.

Parenthetically, although FIG. 17A shows a non-limiting example in which the entirety of the major external surfaces **214**a, **214**b of the rectangular LOE **210** have the first low index material **61** attached thereto, and the entirety of the major external surfaces **224**a, **224**b of the slab-type LOE **220** have the second low index material **62** attached thereto, other configurations are possible. For example, the first low index material **61** may extend down (further along the x-axis) so as to also be attached to minority portions of the major external surfaces **224**a, **224**b of slab-type LOE **220** (located in the "upper" portion of the slab-type LOE **220** that is proximate to the coupling between the two LOEs **210**, **220**).

In certain embodiments falling under the scope of the claims, such as the embodiment illustrated in FIG. 19, light-absorbing material **60** is deployed in association with the low index material that is in contact with the first region **221** (i.e., the low index material that is in contact with the surfaces **214**a, **214**b of the rectangular LOE **210**). In other embodiments not encompassed by the wording of the claims, the low index material that is in contact with the surfaces **214**a, **214**b (e.g., the low index material **61** in FIG. 17A) can be implemented as a light-absorbing material having a low refractive index, such as black paint with inherently low refractive index. Although not illustrated in the drawings, in embodiments not encompassed by the wording of the claims, an additional coating (e.g., AR, black paint) can be applied to a protective film attached to the low index material in the first region **221** of the LOE **205,** similar to as illustrated in FIGS. 16A and 16B.

It is noted that one aspect of encapsulation of the LOE **205** that may be different from the encapsulation of LOE **120 / 120'** relates to the surfaces **212**a, **212**b. In general, for all of the LOEs disclosed herein, the optical properties of any pair major external surfaces that reflect illumination by TIR should be the same. Since the rectangular LOE **210** guides light by four-fold total internal reflection, the optical properties of the opposing surfaces **212**a, **212**b should be the same such that illumination that impinges at the surfaces **212**a, **212**b at a given angle is reflected to the same angle by the surfaces **212**a, **212**b. Thus, if the low index material of the capsule **50** is also directly attached to the surface **212**a (such as low index material **61** or **62** illustrated in FIGS. 17A - 19), care should be taken to ensure that the matching optical properties of the opposing surfaces **212**a, **212**b are preserved such that the range of angles reflected by TIR at the surface **212**b is the same range of angles reflected by TIR at the surface **212**a.

In certain embodiments, the general steps for producing optical devices having an encapsulated rectangular LOE based arrangement are similar to those used for producing optical devices having encapsulated compound LOEs and LOEs that perform one-dimensional aperture expansion. In such embodiments, these steps generally include obtaining the rectangular LOE based arrangement (i.e., obtaining LOE **205**), and then encapsulating the LOE **205** by directly attaching the low index material to the major external surfaces **214**a, **214**b (and preferably also the surface **212**a) of the LOE **210** and the major external surfaces **224**a, **224**b. Obtaining the LOE may, in certain embodiments, include fabricating the LOE **205.** Methods for fabricating encapsulated rectangular LOE based arrangement have been described extensively in various publications by Lumus Ltd. (Israel), including, for example, in the aforementioned US Patent No. 10,133,070, and in co-pending PCT application no. PCT/IL2022/050500. In certain embodiments, the encapsulation step may be performed as an additional step of the LOE fabrication process.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

As used herein, the singular form, "a", "an" and "the" include plural references unless the context clearly dictates otherwise.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

To the extent that the appended claims have been drafted without multiple dependencies, this has been done only to accommodate formal requirements in jurisdictions which do not allow such multiple dependencies. It should be noted that all possible combinations of features which would be implied by rendering the claims multiply dependent are explicitly envisaged and should be considered part of the invention.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. An optical device (10, 100, 110, 200) for directing image illumination towards a user for viewing, the optical device (10, 100, 110, 200) comprising:

a light-guide optical element (LOE) (12, 120, 120', 205, 210, 220) formed from a light-transmitting material having a first refractive index, the LOE (12, 120, 120', 205, 210, 220) including:

a plurality of surfaces including a pair of parallel major external surfaces (14a, 14b, 15a, 15b, 16a, 16b, 124a, 124b, 214a, 214b, 224a, 224b) for guiding image illumination within the LOE (12, 120, 120', 205, 210, 220) by total internal reflection at the major external surfaces (14a, 14b, 15a, 15b, 16a, 16b, 124a, 124b, 214a, 214b, 224a, 224b),

a first region (121, 221) and a second region (122, 222),

a first optical coupling configuration (131) located in the first region (121, 221) and a second optical coupling configuration (132) located in the second region (122, 222), the first optical coupling configuration (131) configured for deflecting a part of the image illumination that is guided within the first region (121, 221) by total internal reflection at the major external surfaces (14a, 14b, 15a, 15b, 16a, 16b, 124a, 124b, 214a, 214b, 224a, 224b) towards the second region (122, 222), and the second optical coupling configuration (132) configured for deflecting a part of the image illumination that is guided within the LOE (12, 120, 120', 205, 210, 220) by total internal reflection at the major external surfaces (14a, 14b, 15a, 15b, 16a, 16b, 124a, 124b, 214a, 214b, 224a, 224b) from the first region (121, 221) to the second region (122, 222) out of the LOE (12, 120, 120', 205, 210, 220) towards the user; and

an optical material including at least one transparent material directly attached to the LOE (12, 120, 120', 205, 210, 220) at least at the major external surfaces (14a, 14b, 15a, 15b, 16a, 16b, 124a, 124b, 214a, 214b, 224a, 224b) so as to be in direct contact with the major external surfaces (14a, 14b, 15a, 15b, 16a, 16b, 124a, 124b, 214a, 214b, 224a, 224b) at least at the first region (121, 221) and so as to at least partially encapsulate the LOE (12, 120, 120', 205, 210, 220), the optical material having a second refractive index that is less than the first refractive index so as to maintain conditions of total internal reflection at the major external surfaces (14a, 14b, 15a, 15b, 16a, 16b, 124a, 124b, 214a, 214b, 224a, 224b), **characterized in that** the optical device (10, 100, 110, 200) further comprises a light-absorbing material overlaid on the at least one transparent material in the first region.

2. The optical device (10, 100, 110, 200) of claim 1, wherein the at least one transparent material is formed from a solid-state material.

3. The optical device (10, 100, 110, 200) of claim 1, wherein the at least one transparent material is formed from one or more layers of optical adhesive.

4. The optical device (10, 100, 110, 200) of claim 1, wherein the at least one transparent material is a thin coating layer of a polymer or dielectric material.

5. The optical device (10, 100, 110, 200) of claim 1, wherein the optical material has a thickness that is sufficiently small such that surface patterns of the optical material follow blemish patterns at the major external surfaces (14a, 14b, 15a, 15b, 16a, 16b, 124a, 124b, 214a, 214b, 224a, 224b).

6. The optical device (10, 100, 110, 200) of claim 5, wherein the thickness is in a range from 2 $\mu$m to 20 $\mu$m.

7. The optical device (10, 100, 110, 200) of claim 1, wherein the first optical coupling configuration (131) is implemented as a first plurality of mutually parallel partially reflecting surfaces (30, 30a, 30b, 30c, 30d, 30e, 30f) having a first orientation, and wherein the second optical coupling configuration (132) is implemented as a second plurality of mutually parallel partially reflecting surfaces (30, 30a, 30b, 30c, 30d, 30e, 30f) having a second orientation that is non-parallel to the first orientation.

8. The optical device (10, 100, 110, 200) of claim 1, wherein the first optical coupling configuration (131) is implemented as a first at least one diffractive element associated with one of the major external surfaces (14a, 14b, 15a, 15b, 16a, 16b, 124a, 124b, 214a, 214b, 224a, 224b), and wherein the second optical coupling configuration (132) is implemented as a second at least one diffractive element associated with one of the major external surfaces (14a, 14b, 15a, 15b, 16a, 16b, 124a, 124b, 214a, 214b, 224a, 224b).

9. The optical device (10, 100, 110, 200) of claim 1, further comprising: at least one optical element attached to the at least one transparent material, wherein the at least one optical element includes: a lens (76a, 76b) attached to a first portion of the at least one transparent material that is directly attached to a first of the major external surfaces (14a, 14b, 15a, 15b, 16a, 16b, 124a, 124b, 214a, 214b, 224a, 224b), and a protective film attached to a second portion of the at least one transparent material that is directly attached to a second of the major external surfaces (14a, 14b, 15a, 15b, 16a, 16b, 124a, 124b, 214a, 214b, 224a, 224b).

10. The optical device (10, 100, 110, 200) of claim 1, further comprising: at least one optical element attached to the at least one transparent material, wherein the at least one optical element includes: a first lens (76a) attached to a first portion of the at least one transparent material that is directly attached to a first of the major external surfaces (14a, 14b, 15a, 15b, 16a, 16b, 124a, 124b, 214a, 214b, 224a, 224b), and a second lens (76b) attached to a second portion of the at least one transparent material that is directly attached to a second of the major external surfaces (14a, 14b, 15a, 15b, 16a, 16b, 124a, 124b, 214a, 214b, 224a, 224b).

11. The optical device (10, 100, 110, 200) of claim 1, further comprising: at least one optical element attached to the at least one transparent material, wherein the at least one optical element includes: a first protective film attached to a first portion of the at least one transparent material that is directly attached to a first of the major external surfaces (14a, 14b, 15a, 15b, 16a, 16b, 124a, 124b, 214a, 214b, 224a, 224b), and a second protective film attached to a second portion of the at least one transparent material that is directly attached to a second of the major external surfaces (14a, 14b, 15a, 15b, 16a, 16b, 124a, 124b, 214a, 214b, 224a, 224b).

12. The optical device (10, 100, 110, 200) of claim 1, wherein the LOE (12, 120, 120', 205, 210, 220) is a pre-cut LOE (12, 120, 120', 205, 210, 220) that is cut from a precursor LOE (12, 120, 120', 205, 210, 220) prior to the optical material being directly attached to the LOE (12, 120, 120', 205, 210, 220) such that the LOE (12, 120, 120', 205, 210, 220) includes substantially only an active area in which the image illumination propagates, and wherein one or more perimeter edges (15a, 15b, 16a, 16b) of the LOE (12, 120, 120', 205, 210, 220) are coated with at least one layer of opaque material.

13. A method for fabricating an optical device (10, 100, 110, 200) that directs image illumination towards a user for viewing, the method comprising:

obtaining a light-guide optical element (LOE) (12, 120, 120', 205, 210, 220) formed from a light-transmitting material having a first refractive index, the LOE (12, 120, 120', 205, 210, 220) including a plurality of surfaces including a pair of parallel major external surfaces (14a, 14b, 15a, 15b, 16a, 16b, 124a, 124b, 214a, 214b, 224a, 224b) for guiding image illumination within the LOE (12, 120, 120', 205, 210, 220) by total internal reflection at the major external surfaces (14a, 14b, 15a, 15b, 16a, 16b, 124a, 124b, 214a, 214b, 224a, 224b), the LOE (12, 120, 120', 205, 210, 220) further including a first region (121, 221) and a second region (122, 222), and a first optical coupling configuration (131) located in the first region (121, 221) and a second optical coupling configuration (132) located in the second region (122, 222), the first optical coupling configuration (131) configured for deflecting a part of the image illumination that is guided within the first region (121, 221) by total internal reflection at the major external surfaces (14a, 14b, 15a, 15b, 16a, 16b, 124a, 124b, 214a, 214b, 224a, 224b) towards the second region (122, 222), and the second optical coupling configuration (132) configured for deflecting a part of the image illumination that is guided within the LOE (12, 120, 120', 205, 210, 220) by total internal reflection at the major external surfaces (14a, 14b, 15a, 15b, 16a, 16b, 124a, 124b, 214a, 214b, 224a, 224b) from the first region (121, 221) to the second region (122, 222) out of the LOE (12, 120, 120', 205, 210, 220) towards the user;

directly attaching an optical material that includes at least one transparent material to the LOE (12, 120, 120', 205, 210, 220) at least at the major external surfaces (14a, 14b, 15a, 15b, 16a, 16b, 124a, 124b, 214a, 214b, 224a, 224b) such that the optical material directly contacts the major external surfaces (14a, 14b, 15a, 15b, 16a, 16b, 124a, 124b, 214a, 214b, 224a, 224b) at least at the first region (121, 221) and at least partially encapsulates the LOE (12, 120, 120', 205, 210, 220), the optical material having a second refractive index that is less than the first refractive index so as to maintain conditions of total internal reflection at the major external surfaces (14a, 14b, 15a, 15b, 16a, 16b, 124a, 124b, 214a, 214b, 224a, 224b) **characterized in that** the method further comprises: overlaying light-absorbing material on the at least one transparent material in the first region.

**Patentansprüche**

1. Optische Vorrichtung (10, 100, 110, 200) zum Richten von Bildbeleuchtung auf einen Benutzer zur Betrachtung, die optische Vorrichtung (10, 100, 110, 200) umfassend: ein optisches Lichtleiterelement (LOE) (12, 120, 120', 205, 210, 220), das aus einem lichtdurchlässigen Material mit einem ersten Brechungsindex gebildet ist, wobei das LOE (12, 120, 120', 205, 210, 220) Folgendes einschließt:

eine Vielzahl von Oberflächen, die ein Paar paralleler Hauptaußenoberflächen (14a, 14b, 15a, 15b, 16a, 16b, 124a, 124b, 214a, 214b, 224a, 224b) einschließen, um die Bildbeleuchtung innerhalb des LOE (12, 120, 120', 205, 210, 220) durch interne Totalreflexion an den Hauptaußenoberflächen (14a, 14b, 15a, 15b, 16a, 16b, 124a, 124b, 214a, 214b, 224a, 224b) zu leiten,

eine erste Region (121, 221) und eine zweite Region (122, 222),

eine erste optische Kopplungskonfiguration (131), die sich in der ersten Region (121, 221) befindet, und eine zweite optische Kopplungskonfiguration (132), die sich in der zweiten Region (122, 222) befindet, wobei die erste optische Kopplungskonfiguration (131) konfiguriert ist, um einen Teil der Bildbeleuchtung, die innerhalb der ersten Region (121, 221) durch interne Totalreflexion an den Hauptoberflächen (14a, 14b, 15a, 15b, 16a, 16b, 124a, 124b, 214a, 214b, 224a, 224b) in Richtung der zweiten Region (122, 222), und die zweite optische Kopplungskonfiguration (132), die konfiguriert ist, um einen Teil der Bildbeleuchtung abzulenken, die innerhalb des LOE (12, 120, 120', 205, 210, 220) durch interne Totalreflexion an den Hauptoberflächen (14a, 14b, 15a, 15b, 16a, 16b, 124a, 124b, 214a, 214b, 224a, 224b) von der ersten Region (121, 221) zur zweiten Region (122, 222) aus dem LOE (12, 120, 120', 205, 210, 220) heraus in Richtung des Benutzers abzulenken; und

ein optisches Material, das mindestens ein transparentes Material einschließt, das mindestens an den Hauptaußenoberflächen (14a, 14b, 15a, 15b, 16a, 16b, 124a, 124b, 214a, 214b, 224a, 224b) direkt mit dem LOE (12, 120, 120', 205, 210, 220) verbunden ist, sodass es in direktem Kontakt mit den Hauptoberflächen (14a, 14b, 15a, 15b, 16a, 16b, 124a, 124b, 214a, 214b, 224a, 224b) wenigstens an der ersten Region (121, 221) steht und den LOE (12, 120, 120', 205, 210, 220) mindestens teilweise einkapselt, wobei das optische Material einen zweiten Brechungsindex aufweist, der kleiner als der erste Brechungsindex ist, um die Bedingungen der inneren Totalreflexion an den Hauptaußenoberflächen (14a, 14b, 15a, 15b, 16a, 16b, 124a, 124b, 214a, 214b, 224a, 224b) aufrechtzuerhalten, **dadurch gekennzeichnet, dass** die optische Vorrichtung (10, 100, 110, 200) ferner ein lichtabsorbierendes Material aufweist, das auf dem mindestens einen transparenten Material in der ersten Region liegt.

2. Optische Vorrichtung (10, 100, 110, 200) nach Anspruch 1, wobei das mindestens eine transparente Material aus einem Festkörpermaterial gebildet ist.

3. Optische Vorrichtung (10, 100, 110, 200) nach Anspruch 1, wobei das mindestens eine transparente Material aus einer oder mehreren Schichten eines optischen Klebstoffs gebildet ist.

4. Optische Vorrichtung (10, 100, 110, 200) nach Anspruch 1, wobei das mindestens eine transparente Material eine dünne Beschichtungsschicht aus einem Polymer oder dielektrischen Material ist.

5. Optische Vorrichtung (10, 100, 110, 200) nach Anspruch 1, wobei das optische Material eine Dicke aufweist, die ausreichend gering ist, sodass die Oberflächenmuster des optischen Materials Makelmustern an den Hauptoberflächen (14a, 14b, 15a, 15b, 16a, 16b, 124a, 124b, 214a, 214b, 224a, 224b) folgen.

6. Optische Vorrichtung (10, 100, 110, 200) nach Anspruch 5, wobei die Dicke in einem Bereich von 2 $\mu$m bis 20 $\mu$m liegt.

7. Optische Vorrichtung (10, 100, 110, 200) nach Anspruch 1, wobei die erste optische Kopplungskonfiguration (131) als eine erste Vielzahl von zueinander parallelen, teilweise reflektierenden Oberflächen (30, 30a, 30b, 30c, 30d, 30e, 30f) implementiert ist, die eine erste Ausrichtung aufweisen, und wobei die zweite optische Kopplungskonfiguration (132) als eine zweite Vielzahl von zueinander parallelen, teilweise reflektierenden Oberflächen (30, 30a, 30b, 30c, 30d, 30e, 30f) implementiert ist, die eine zweite Ausrichtung aufweisen, die nicht parallel zu der ersten Ausrichtung ist.

8. Optische Vorrichtung (10, 100, 110, 200) nach Anspruch 1, wobei die erste optische Kupplungskonfiguration (131) als ein erstes mindestens ein beugendes Element implementiert ist, das mit einer der Hauptaußenoberflächen (14a, 14b, 15a, 15b, 16a, 16b, 124a, 124b, 214a, 214b, 224a, 224b) verbunden ist, und wobei die zweite optische Kopplungskonfiguration (132) als ein zweites mindestens ein beugendes Element implementiert ist, das mit einer der Hauptoberflächen (14a, 14b, 15a, 15b, 16a, 16b, 124a, 124b, 214a, 214b, 224a, 224b) verbunden ist.

9. Optische Vorrichtung (10, 100, 110, 200) nach Anspruch 1, ferner umfassend: mindestens ein optisches Element, das an dem mindestens einen transparenten Material angebracht ist, wobei das mindestens eine optische Element Folgendes einschließt: eine Linse (76a, 76b), die an einem ersten Abschnitt des mindestens einen transparenten Materials befestigt ist, der direkt an einer ersten der Hauptaußenoberflächen (14a, 14b, 15a, 15b, 16a, 16b, 124a, 124b, 214a, 214b, 224a, 224b) befestigt ist, und eine Schutzfolie, die an einem zweiten Abschnitt des mindestens einen transparenten Materials angebracht ist, das direkt an einer zweiten der Hauptaußenoberflächen (14a, 14b, 15a, 15b, 16a, 16b, 124a, 124b, 214a, 214b, 224a, 224b) angebracht ist.

10. Optische Vorrichtung (10, 100, 110, 200) nach Anspruch 1, ferner umfassend: mindestens ein optisches Element, das an dem mindestens einen transparenten Material angebracht ist, wobei das mindestens eine optische Element Folgendes einschließt: eine erste Linse (76a), die an einem ersten Abschnitt des mindestens einen transparenten Materials befestigt ist, der direkt an einer ersten der Hauptaußenoberflächen (14a, 14b, 15a, 15b, 16a, 16b, 124a, 124b, 214a, 214b, 224a, 224b) befestigt ist, und eine zweite Linse (76b), die an einem zweiten Abschnitt des mindestens einen transparenten Materials angebracht ist, das direkt an einer zweiten der Hauptaußenoberflächen (14a, 14b, 15a, 15b, 16a, 16b, 124a, 124b, 214a, 214b, 224a, 224b) angebracht ist.

11. Optische Vorrichtung (10, 100, 110, 200) nach Anspruch 1, ferner umfassend: mindestens ein optisches Element, das an dem mindestens einen transparenten Material angebracht ist, wobei das mindestens eine optische Element Folgendes einschließt: eine erste Schutzfolie, die an einem ersten Abschnitt des mindestens einen transparenten Materials angebracht ist, der direkt an einer ersten der Hauptaußenoberflächen (14a, 14b, 15a, 15b, 16a, 16b, 124a, 124b, 214a, 214b, 224a, 224b) angebracht ist, und eine zweite Schutzfolie, die an einem zweiten Abschnitt des mindestens einen transparenten Materials angebracht ist, das direkt an einer zweiten der Hauptaußenoberflächen . (14a, 14b, 15a, 15b, 16a, 16b, 124a, 124b, 214a, 214b, 224a, 224b) angebracht ist.

12. Optische Vorrichtung (10, 100, 110, 200) nach Anspruch 1, wobei das LOE (12, 120, 120', 205, 210, 220) ein vorgeschnittenes LOE (12, 120, 120', 205, 210, 220) ist, das aus einem Vorläufer-LOE (12, 120, 120', 205, 210, 220) geschnitten wird, bevor das optische Material direkt an dem LOE (12, 120, 120', 205, 210, 220) geschnitten wird, sodass das LOE (12, 120, 120', 205, 210, 220) im Wesentlichen nur einen aktiven Bereich einschließt, in dem sich die Bildbeleuchtung fortschreitet, und wobei ein oder mehrere Umfangsränder (15a, 15b, 16a, 16b) des LOE (12, 120, 120', 205, 210, 220) mit mindestens einer Schicht aus undurchsichtigem Material beschichtet sind.

13. Verfahren zum Herstellen einer optischen Vorrichtung (10, 100, 110, 200), die die Bildbeleuchtung auf einen Benutzer zur Betrachtung richtet, das Verfahren umfassend:

Erhalten eines optischen Lichtleiterelements (LOE) (12, 120, 120', 205, 210, 220), das aus einem lichtdurchlässigen Material mit einem ersten Brechungsindex gebildet ist, wobei das LOE (12, 120, 120', 205, 210, 220) eine Vielzahl von Oberflächen einschließlich eines Paars paralleler Hauptaußenoberflächen (14a, 14b, 15a, 15b, 16a, 16b, 124a, 124b, 214a, 214b, 224a, 224b) zur Führung der Bildbeleuchtung innerhalb des LOE (12, 120, 120', 205, 210, 220) durch interne Totalreflexion an den Hauptoberflächen (14a, 14b, 15a, 15b, 16a, 16b, 124a, 124b, 214a, 214b, 224a, 224b) einschließt, das LOE (12, 120, 120', 205, 210, 220) ferner eine erste Region (121, 221) und eine zweite Region (122, 222) sowie eine erste optische Kopplungskonfiguration (131), die sich in der ersten Region (121, 221) befindet, und eine zweite optische Kopplungskonfiguration (132), die sich in der zweiten Region (122, 222) befindet, einschließt, wobei die erste optische Kopplungskonfiguration (131) konfiguriert ist, um einen Teil der Bildbeleuchtung, die geführt wird innerhalb der ersten Region (121, 221) durch interne Totalreflexion an den Hauptaußenoberflächen (14a, 14b, 15a, 15b, 16a, 16b, 124a, 124b, 214a, 214b, 224a, 224b) in Richtung der zweiten Region (122, 222) abzulenken, und die zweite optische Kopplungskonfiguration (132) innerhalb des LOE (12, 120, 120', 205, 210, 220) durch interne Totalreflexion an den Hauptaußenoberflächen (14a, 14b, 15a, 15b, 16a, 16b, 124a, 124b, 214a, 214b, 224a, 224b) von der ersten Region (121, 221) zur zweiten Region (122, 222) aus dem LOE (12, 120, 120', 205, 210, 220) heraus in Richtung des Benutzers abzulenken;

direktes Anbringen eines optischen Materials, das mindestens ein transparentes Material einschließt, an dem LOE (12, 120, 120', 205, 210, 220) mindestens an den Hauptaußenoberflächen (14a, 14b, 15a, 15b, 16a, 16b, 124a, 124b, 214a, 214b, 224a, 224b), sodass das optische Material die Hauptaußenoberflächen (14a, 14b, 15a, 15b, 16a, 16b, 124a, 124b, 214a, 214b, 224a, 224b) mindestens in der ersten Region (121, 221) und mindestens teilweise das LOE (12, 120, 120', 205, 210, 220) einkapselt, wobei das optische Material einen zweiten Brechungsindex aufweist, der kleiner als der erste Brechungsindex ist, um Bedingungen der inneren Totalreflexion an den Hauptaußenoberflächen (14a, 14b, 15a, 15b, 16a, 16b, 124a, 124b, 214a, 214b, 224a, 224b) aufrecht zu erhalten, **dadurch gekennzeichnet, dass** das Verfahren ferner Folgendes umfasst:

Überlagern von lichtabsorbierendem Material auf dem mindestens einen transparenten Material in der ersten Region.

**Revendications**

1. Dispositif optique (10, 100, 110, 200) destiné à diriger un éclairage d'image vers un utilisateur pour la visualisation, le dispositif optique (10, 100, 110, 200) comprenant :

   un élément optique de guide de lumière (LOE) (12, 120, 120', 205, 210, 220) formé à partir d'un matériau transmettant la lumière ayant un premier indice de réfraction, le LOE (12, 120, 120', 205, 210, 220) comportant :

   une pluralité de surfaces comportant une paire de surfaces externes principales parallèles (14a, 14b, 15a, 15b, 16a, 16b, 124a, 124b, 214a, 214b, 224a, 224b) pour guider un éclairage d'image dans le LOE (12, 120, 120', 205, 210, 220) par réflexion interne totale sur les surfaces externes principales (14a, 14b, 15a, 15b, 16a, 16b, 124a, 124b, 214a, 214b, 224a, 224b),
   une première région (121, 221) et une seconde région (122, 222),
   une première configuration de couplage optique (131) située dans la première région (121, 221) et une seconde configuration de couplage optique (132) située dans la seconde région (122, 222), la première configuration de couplage optique (131) étant conçue pour dévier une partie de l'éclairage d'image, qui est guidé dans la première région (121, 221) par réflexion totale interne au niveau des surfaces externes principales (14a, 14b, 15a, 15b, 16a, 16b, 124a, 124b, 214a, 214b, 224a, 224b), vers la seconde région (122, 222), et la seconde configuration de couplage optique (132) étant conçue pour dévier une partie de l'éclairage d'image, qui est guidé dans le LOE (12, 120, 120', 205, 210, 220) par réflexion totale interne au niveau des surfaces externes principales (14a, 14b, 15a, 15b, 16a, 16b, 124a, 124b, 214a, 214b, 224a, 224b) de la première région (121, 221) vers la seconde région (122, 222) hors du LOE (12, 120, 120', 205, 210, 220) vers l'utilisateur ; et
   un matériau optique comportant au moins un matériau transparent directement fixé au LOE (12, 120, 120', 205, 210, 220) au moins sur les surfaces externes principales (14a, 14b, 15a, 15b, 16a, 16b, 124a, 124b, 214a, 214b, 224a, 224b) de manière à être en contact direct avec les surfaces externes principales (14a, 14b, 15a, 15b, 16a, 16b, 124a, 124b, 214a, 214b, 224a, 224b) au moins sur la première région (121, 221) et à encapsuler au moins partiellement le LOE (12, 120, 120', 205, 210, 220), le matériau optique ayant un second indice de réfraction inférieur au premier indice de réfraction afin de maintenir des conditions de réflexion totale interne sur les surfaces externes principales (14a, 14b, 15a, 15b, 16a, 16b, 124a, 124b, 214a, 214b, 224a, 224b), **caractérisé en ce que** le dispositif optique (10, 100, 110, 200) comprend en outre un matériau absorbant la lumière superposé à l'au moins un matériau transparent dans la première région.

2. Dispositif optique (10, 100, 110, 200) selon la revendication 1, dans lequel l'au moins un matériau transparent est formé à partir d'un matériau à l'état solide.

3. Dispositif optique (10, 100, 110, 200) selon la revendication 1, dans lequel l'au moins un matériau transparent est formé d'une ou plusieurs couches d'adhésif optique.

4. Dispositif optique (10, 100, 110, 200) selon la revendication 1, dans lequel l'au moins un matériau transparent est une fine couche de revêtement d'un polymère ou d'un matériau diélectrique.

5. Dispositif optique (10, 100, 110, 200) selon la revendication 1, dans lequel le matériau optique a une épaisseur suffisamment petite pour que des motifs de surface du matériau optique suivent des motifs de défaut sur les surfaces externes principales (14a, 14b, 15a, 15b, 16a, 16b, 124a, 124b, 214a, 214b, 224a, 224b).

6. Dispositif optique (10, 100, 110, 200) selon la revendication 5, dans lequel l'épaisseur est dans une plage de 2 μm à 20 μm.

7. Dispositif optique (10, 100, 110, 200) selon la revendication 1, dans lequel la première configuration de couplage optique (131) est mise en œuvre sous la forme d'une première pluralité de surfaces partiellement réfléchissantes mutuellement parallèles (30, 30a, 30b, 30c, 30d, 30e, 30f) ayant une première orientation, et dans lequel la seconde configuration de couplage optique (132) est mise en œuvre sous la forme d'une seconde pluralité de surfaces partiellement réfléchissantes mutuellement parallèles (30, 30a, 30b, 30c, 30d, 30e, 30f) ayant une seconde orientation qui n'est pas parallèle à la première orientation.

8. Dispositif optique (10, 100, 110, 200) selon la revendication 1, dans lequel la première configuration de couplage optique (131) est mise en œuvre sous la forme d'au moins un premier élément diffractif associé à l'une des surfaces externes principales (14a, 14b, 15a, 15b, 16a, 16b, 124a, 124b, 214a, 214b, 224a, 224b), et dans lequel la seconde configuration de couplage optique (132) est mise en œuvre sous la forme d'au moins un second élément diffractif associé à l'une des surfaces externes principales (14a, 14b, 15a, 15b, 16a, 16b, 124a, 124b, 214a, 214b, 224a, 224b).

9. Dispositif optique (10, 100, 110, 200) selon la revendication 1, comprenant en outre : au moins un élément optique fixé à l'au moins un matériau transparent, dans lequel l'au moins un élément optique comporte : une lentille (76a, 76b) fixée à une première partie de l'au moins un matériau transparent, qui est directement fixée à une première surface parmi les surfaces externes principales (14a, 14b, 15a, 15b, 16a, 16b, 124a, 124b, 214a, 214b, 224a, 224b), et un film protecteur fixé à une seconde partie de l'au moins un matériau transparent, qui est directement fixée à une seconde surface parmi les surfaces externes principales (14a, 14b, 15a, 15b, 16a, 16b, 124a, 124b, 214a, 214b, 224a, 224b).

10. Dispositif optique (10, 100, 110, 200) selon la revendication 1, comprenant en outre : au moins un élément optique fixé à l'au moins un matériau transparent, dans lequel l'au moins un élément optique comporte : une première lentille (76a) fixée à une première partie de l'au moins un matériau transparent, qui est directement fixée à une première surface parmi les surfaces externes principales (14a, 14b, 15a, 15b, 16a, 16b, 124a, 124b, 214a, 214b, 224a, 224b), et une seconde lentille (76b) fixée à une seconde partie de l'au moins un matériau transparent, qui est directement fixée à une seconde surface parmi les surfaces externes principales (14a, 14b, 15a, 15b, 16a, 16b, 124a, 124b, 214a, 214b, 224a, 224b).

11. Dispositif optique (10, 100, 110, 200) selon la revendication 1, comprenant en outre : au moins un élément optique fixé à l'au moins un matériau transparent, dans lequel l'au moins un élément optique comporte : un premier film protecteur fixé à une première partie de l'au moins un matériau transparent, qui est directement fixée à une première surface parmi les surfaces externes principales (14a, 14b, 15a, 15b, 16a, 16b, 124a, 124b, 214a, 214b, 224a, 224b), et un second film protecteur fixé à une seconde partie de l'au moins un matériau transparent, qui est directement fixée à une seconde surface parmi les surfaces externes principales (14a, 14b, 15a, 15b, 16a, 16b, 124a, 124b, 214a, 214b, 224a, 224b).

12. Dispositif optique (10, 100, 110, 200) selon la revendication 1, dans lequel le LOE (12, 120, 120', 205, 210, 220) est un LOE prédécoupé (12, 120, 120', 205, 210, 220) qui est découpé dans un LOE précurseur (12, 120, 120', 205, 210, 220) avant la fixation directe du matériau optique sur le LOE (12, 120, 120', 205, 210, 220), de sorte que le LOE (12, 120, 120', 205, 210, 220) ne comporte sensiblement qu'une zone active dans laquelle se propage l'éclairage d'image, et dans lequel un ou plusieurs bords périphériques (15a, 15b, 16a, 16b) du LOE (12, 120, 120', 205, 210, 220) sont recouverts d'au moins une couche de matériau opaque.

13. Procédé de fabrication d'un dispositif optique (10, 100, 110, 200) qui dirige un éclairage d'image vers un utilisateur pour visualisation, le procédé comprenant :

l'obtention d'un élément optique de guide de lumière (LOE) (12, 120, 120', 205, 210, 220) constitué d'un matériau transmettant la lumière et présentant un premier indice de réfraction, le LOE (12, 120, 120', 205, 210, 220) comportant une pluralité de surfaces, dont une paire de surfaces externes principales parallèles (14a, 14b, 15a, 15b, 16a, 16b, 124a, 124b, 214a, 214b, 224a, 224b) permettant de guider un éclairage d'image à l'intérieur du LOE (12, 120, 120', 205, 210, 220) par réflexion totale interne au niveau des surfaces externes principales (14a, 14b, 15a, 15b, 16a, 16b, 124a, 124b, 214a, 214b, 224a, 224b), le LOE (12, 120, 120', 205, 210, 220) comportant en outre une première région (121, 221) et une seconde région (122, 222), et une première configuration de couplage optique (131) située dans la première région (121, 221) et une seconde configuration de couplage optique (132) située dans la seconde région (122, 222), la première configuration de couplage optique (131) étant conçue pour dévier une partie de l'éclairage d'image qui est guidé dans la première région (121, 221) par réflexion totale interne sur les surfaces externes principales (14a, 14b, 15a, 15b, 16a, 16b, 124a, 124b, 214a, 214b, 224a, 224b) vers la seconde région (122, 222), et la seconde configuration de couplage optique (132) dans le LOE (12, 120, 120', 205, 210, 220) par réflexion interne totale sur les surfaces externes principales (14a, 14b, 15a, 15b, 16a, 16b, 124a, 124b, 214a, 214b, 224a, 224b) de la première région (121, 221) vers la seconde région (122, 222) hors du LOE (12, 120, 120', 205, 210, 220) vers l'utilisateur ;
la fixation directe d'un matériau optique qui comporte au moins un matériau transparent au LOE (12, 120, 120', 205, 210, 220) au moins sur les surfaces externes principales (14a, 14b, 15a, 15b, 16a, 16b, 124a, 124b, 214a, 214b, 224a, 224b) de sorte que le matériau optique soit en contact direct avec les surfaces externes principales (14a, 14b, 15a, 15b, 16a, 16b, 124a, 124b, 214a, 214b, 224a, 224b) au moins dans la première région (121, 221) et encapsule au moins partiellement le LOE (12, 120, 120', 205, 210, 220), le matériau optique ayant un second indice de réfraction inférieur au premier indice de réfraction afin de maintenir des conditions de réflexion totale interne sur les surfaces externes principales (14a, 14b, 15a, 15b, 16a, 16b, 124a, 124b, 214a, 214b, 224a, 224b), **caractérisé en ce que** le procédé comprend en outre :

la superposition d'un matériau absorbant la lumière sur l'au moins un matériau transparent dans la première région.

FIG. 1

FIG. 2A

FIG. 2B

FIG. 2C

EP 4 295 182 B1

FIG. 3

FIG. 4A

FIG. 4B

FIG. 4C

FIG. 4D

FIG. 4E

FIG. 4F

FIG. 5A

FIG. 5B

FIG. 6A

FIG. 6B

FIG. 7A

FIG. 7B

FIG. 8A

FIG. 8B

EP 4 295 182 B1

FIG. 9B

FIG. 9A

FIG. 10

FIG. 11

FIG. 12

FIG. 14

FIG. 13B

FIG. 13A

FIG. 15

FIG. 16A

FIG. 16B

EP 4 295 182 B1

FIG. 17A

FIG. 17B

EP 4 295 182 B1

FIG. 19

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63210672
- US 63251918
- US 63324164
- WO 2021030908 A1
- US 2019243142 A1
- US 2021141141 A1
- WO 2020049542 A
- US 10133070 B
- WO 2020152688 A
- IL 2020051354 W
- IL 2022050500 W